(19) Europäisches Patentamt
European Patent Office
Office européen des brevets

(11) EP 1 990 852 B1

(12) # EUROPEAN PATENT SPECIFICATION

(45) Date of publication and mention of the grant of the patent:
**20.06.2012 Bulletin 2012/25**

(51) Int Cl.:
***H01M 6/04*** *(2006.01)* ***H01M 6/06*** *(2006.01)*
***H01M 6/50*** *(2006.01)*

(21) Application number: **08151613.0**

(22) Date of filing: **19.02.2008**

(54) **Alkaline dry battery**

Alkaline-Trockenbatterie

Pile sèche alcaline

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **10.05.2007 JP 2007125371**

(43) Date of publication of application:
**12.11.2008 Bulletin 2008/46**

(73) Proprietor: **Panasonic Corporation**
**Kadoma-shi**
**Osaka 571-8501 (JP)**

(72) Inventors:
- **Kato, Susumu**
**c/o Matsushita Electric Industrial Co., Ltd.**
**2-1-61 Shiromi, Chuo-ku, Osaka-shi**
**Osaka 540-6207 (JP)**
- **Noya, Shigeto**
**c/o Matsushita Electric Industrial Co., Ltd.,**
**2-1-61 Shiromi, Chuo-ku, Osaka-shi**
**Osaka 540-6207 (JP)**
- **Izumi, Hidekatsu**
**c/o Matsushita Electric Industrial Co., Ltd.**
**2-1-61 Shiromi, Chuo-ku, Osaka-shi**
**Osaka 540-6207 (JP)**

(74) Representative: **Grünecker, Kinkeldey,**
**Stockmair & Schwanhäusser**
**Leopoldstrasse 4**
**80802 München (DE)**

(56) References cited:
**WO-A-2005/022675** **GB-A- 2 200 791**
**US-A- 3 532 552** **US-A- 4 195 120**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 1 990 852 B1

## Description

## BACKGROUND OF THE INVENTION

### Field of the Invention

The present invention relates to alkaline dry batteries and particularly relates to an alkaline dry battery capable of suppressing polarization in both a positive electrode and a negative electrode.

### Description of Related Art

In general, alkaline dry batteries include a positive electrode, a negative electrode, a separator, and an alkaline electrolyte, wherein manganese dioxide, zinc, and an alkaline electrolyte (specifically, an aqueous solution of potassium hydroxide) are used for the positive electrode, the negative electrode, and the electrolyte, respectively.

The alkaline dry batteries are used in a light load discharge range (power consumption of around several tens mA) and are incorporated in remote controllers, watches, and the like. Recent studies promote application of the alkaline dry batteries in a middle load discharge range (power consumption of a hundred to several hundreds mA) and a heavy load discharge range (power consumption of 1000 to 2000 mA). Specifically, examination is promoted for incorporating the alkaline dry batteries to appliances of which power consumption is a hundred to several hundreds mA, such as music replaying devices, game tools, information terminal tools, and the like and to tools of which power consumption is 1000 to 2000 mA, such as digital still cameras and the like. The alkaline dry batteries have been incorporated in some of the tools in practice.

The utilization of the alkaline dry batteries is almost 100 % in the light load discharge range, about 70 % in the middle load discharge range, and about 30 to 40 % in the heavy load discharge range. Accordingly, for using the alkaline dry batteries in the middle and heavy load discharge ranges, an increase in the utilization in these ranges is desirable. Specifically, it is desired to increase the utilization of the alkaline dry batteries in the middle and heavy load discharge ranges with the utilization thereof in the light load discharge ranges maintained.

The utilization is a ratio of a discharge capacity to a theoretical electric capacity. Therefore, to increase the utilization means to increase the discharge capacity, and an increase in the theoretical capacity might lead to an increase in the discharge capacity. In many alkaline dry batteries, the theoretical capacity of the negative electrode is set to 1.0 to 1.25 times the theoretical capacity of the positive electrode. Accordingly, the theoretical capacity of an alkaline dry battery substantially depends on the theoretical capacity of the positive electrode, namely, depends on the weight of the positive electrode active material (manganese dioxide) of the positive electrode (see Japanese Unexamined Patent Application Publication No. 07-122276 and Japanese Unexamined Patent Application Publication No. 09-180736). This means that an increase in content of the positive electrode active material of the positive electrode leads to an increase in the theoretical capacity of the alkaline dry battery.

An increase in the content of the positive electrode active material, however, increases the volume of the positive electrode to invite an increase in size of the alkaline dry battery. In some case, the size of the alkaline dry battery might become substandard, which is impractical.

In view of the foregoing, it was proposed to mix an inorganic compound (titanium dioxide, barium sulfate, or the like, for example) as an additive with the positive electrode (see Japanese Unexamined Patent Application Publications (Translation of PCT Applications) No. 08-510355 and No. 2002-530815). Such additives function as a binder for binding particles of the positive electrode active material, and accordingly, addition of the additive to the positive electrode reduces the occupied volume of the positive electrode active material in the positive electrode. In other words, addition of an additive to the positive electrode can increase the amount of the additive of the positive electrode active material in the positive electrode with no increase in volume of the positive electrode invited. As a result, the theoretical capacity of the alkaline dry battery increases.

US-A-4195120, GB-A-2200791 and WO 2005/022675 also disclose alxaline dry batteries.

## SUMMARY OF THE INVENTION

In many cases, the alkaline dry batteries have an inside-out structure. The inside-out structure is small in area of the electrodes and thick in electrode plate to have large polarization when compared with a spiral structure (structures of nickel-metal hydride batteries and lithium primary batteries) (see "Battery Handbook," page 119, edited by Battery Handbook Editor's Society, published at Maruzen Co., Ltd., August 20, 1990). Large polarization invites deceleration of the electrode reactions and the like to lower the discharge capacity, thereby reducing the utilization.

In the alkaline dry batteries, however, no approach to suppression of polarization has been proposed. Under the circumstances, the present invention suppresses polarization by adding a battery depolarizer to an alkaline electrolyte.

Specifically, each alkaline dry battery in accordance with the present invention includes a positive electrode, a negative electrode, a separator, and an alkaline electrolyte, wherein at least the alkaline electrolyte contains a battery depolarizer.

In a first alkaline dry battery, an organic compound having a depolarization function to both the positive electrode and the negative electrode or an alkaline metal salt thereof is used as the battery depolarizer.

Second and third alkaline dry batteries are LR6 batteries. The second alkaline dry battery satisfies, when the closed circuit voltage is lower than 0.9 V in the m-th cycle in repetition of a discharging cycle where a current of 250 mA is discharged for one hour a day,

$$0<(V_{i1}-V_{f1})\leq 0.35 \quad \ldots \text{(Expression 1)},$$

where $V_{i1}$ (volt) is a closed circuit voltage at discharge start in the (m-1)-th cycle, and $V_{f1}$ (volt) is a closed circuit voltage at discharge end in the (m-1)-th cycle.

The third alkaline dry battery contains, as a positive electrode active material of the positive electrode, manganese dioxide of which theoretical capacity is 308 mAh/g, and

$$0.76\leq(250T/308C)\leq 0.86 \quad \ldots \text{(Expression 2)}$$

is satisfied where C (g) is a weight of the manganese dioxide in the positive electrode and T (hour) is an accumulated discharge duration until the closed circuit voltage becomes lower than 0.9 V in repetition of a discharge cycle where a current of 250 mA is discharged for one hour a day.

Fourth and fifth alkaline dry batteries are of LR03 batteries.

The fourth alkaline dry battery satisfies, when the closed circuit voltage is lower than 0.9 V in the n-th cycle in repetition of a discharge cycle where a current of 100 mA is discharge for one hour a day,

$$0<(V_{i2}-V_{f2})\leq 0.35 \quad \ldots \text{(Expression 3)},$$

where $V_{i2}$ (volt) is a closed circuit voltage at discharge start in the (n-1)-th cycle and $V_{f2}$ (volt) is a closed circuit voltage at discharge end in the (n-1)-th cycle.

The fifth alkaline dry battery contains as the positive electrode active material of the positive electrode, manganese dioxide of which theoretical capacity is 308 mAh/g, and

$$0.84\leq(100T/308C)\leq 0.92 \quad \ldots \text{(Expression 4)},$$

is satisfied where C (g) is a weight of the manganese dioxide in the positive electrode and T (hour) is an accumulated discharge duration until the closed circuit voltage becomes lower than 0.9 V in repetition of a discharge cycle where a current of 100 mA is discharged for one hour a day.

## BRIEF DESCRIPTION OF THE DRAWINGS

FIG. **1** is a partial sectional view of an alkaline dry battery in accordance with an embodiment.
FIG. **2** is a graph schematically showing battery characteristics.
FIG. **3** is a graph showing battery characteristics in Working Example 1 and Comparative Example 1.

## DESCRIPTION OF THE PREFERRED EMBODIMENT

Prior to description of an alkaline dry battery in accordance with the present invention, description will be given about the logic of polarization caused in a conventional alkaline dry cell. The conventional alkaline dry battery is an

alkaline dry battery in which a battery depolarizer of an organic compound as will be described later is not mixed with an alkaline electrolyte.

Polarization is a phenomenon that the electrode potential or the inter-terminal potential is different between when the current flows and when the current does not flow. There are some factors of causing polarization in an alkaline dry battery, wherein a main factor of causing polarization might be inhibition of ion diffusion in the discharge ending, as described below.

In the positive electrode and the negative electrode of the alkaline dry battery, the following electrode reactions occur.

(Positive electrode) $MnO_2+H^++e^- \rightarrow MnOOH$

(Negative electrode) $Zn+4OH^- \rightarrow Zn(OH)_4^{2-}+2e^-$

When the electrode reactions occur, $H^+$ and $OH^-$ are consumed in the positive electrode and the negative electrode, respectively, to decrease the densities of $H^+$ and $OH^-$ in the surfaces of the positive electrode and the negative electrode, respectively. In the beginning of discharge, $H^+$ moves in the alkaline electrolyte and holes of manganese dioxide to diffuse into the positive electrode while $OH^-$ moves in the alkaline electrolyte to diffuse into the negative electrode. The diffusion suppresses density lowering of $H^+$ in the surface of the positive electrode and $OH^-$ in the surface of the negative electrode to allow discharge to continue.

As discharge progresses, however, it becomes difficult to secure the alkaline electrolyte because $H^+$ and $OH^-$ are supplied from the alkaline electrolyte, so that $H^+$ and $OH^-$ move less in the alkaline electrolyte. This invites an increase in internal resistance to lower the voltage. When diffusion of $H^+$ and OH- is inhibited, the respective densities of $H^+$ and $OH^-$ in the respective surfaces of the positive electrode and the negative electrode might lower to inhibit the progress of the aforementioned electrode reactions.

Further, though $Zn(OH)_4^{2-}$ can be present as ion in the surface of the negative electrode when the density of $OH^-$ is high, ZnO will be deposited on the surface of the negative electrode because the following reaction is caused as the density of $OH^-$ decreases. In other words, a passivation layer is formed on the surface of the negative electrode as discharge progresses. This inhibits the progress of the electrode reaction in the negative electrode.

(Deposition) $Zn(OH)_4^{2-} \rightarrow ZnO+H_2O+2OH^-$

As describe above, as discharge progresses in the conventional alkaline dry battery, diffusion of $H^+$ and $OH^-$ is inhibited to invite an increase in internal resistance and a passivation layer is formed on the surface of the negative electrode. This lowers the positive electrode potential in the discharge ending when compared with that in the discharge start while the negative electrode potential in the discharge ending increases when compared with that in the discharge start to cause polarization in the conventional alkaline dry battery. Polarization invites lowering of the utilization and shortens the lifetime of the alkaline dry battery.

The inventors examined the way to solve the above problem to find that mixing a predetermined organic compound as a battery depolarizer with an alkaline electrolyte suppresses polarization in both the positive electrode and the negative electrode. One embodiment of the present invention will be described below with reference to FIG. **1.** FIG. 1 is a partial sectional view showing a structure of a general alkaline dry battery as one embodiment of the present invention.

The alkaline dry battery includes, as shown in FIG. **1,** a cylindrical battery case **1** of which one end (the upper end in FIG. **1**) is sealed. The battery case **1** serves as both a positive electrode terminal and a positive electrode current collector, and a hollowed cylindrical positive electrode **2** is in contact with the inner wall of the battery case **1.** A cylindrical separator **4** is provided in the hollowed part of the positive electrode **2** so as to be sealed at one end thereof. A negative electrode **3** is provided in the hollowed part of the separator **4.** Whereby, the positive electrode **2,** the separator **4,** and the negative electrode **3** are arranged in this order from the periphery to the center of the battery case **1.**

The opening (the lower end in FIG. **1**) of the battery case **1** is sealed by an assembly sealant **9.** The assembly sealant **9** is an integration of a nail-shaped negative electrode current collector **6,** a negative electrode terminal plate **7,** and a resin sealant **5,** wherein the negative electrode terminal plate **7** is connected to the negative electrode current collector **6** electrically and the resin sealant **5** is connected to the negative electrode current collector **6** and the negative electrode terminal plate **7** physically. The alkaline dry battery is produced in such a manner that the electric generating elements, such as the positive electrode **2,** the negative electrode **3,** and the like are accommodated in the battery case **1** and the opening of the battery case **1** is sealed by the assembly sealant **9.** The battery case **1** is covered with a label **8.**

The positive electrode **2,** the negative electrode **3,** and the separator **4** each contain an alkaline electrolyte (not shown). As the alkaline electrolyte, an aqueous solution is used which contains potassium hydroxide of 30 to 40 weight % and zinc oxide of 1 to 3 weight %. A battery depolarizer (not shown) is added to the alkaline electrolyte in the present

embodiment. Besides the battery depolarizer, another additive may be solved or dispersed in the alkaline electrolyte according to needs. The battery depolarizer will be described later in detail.

Description will be given below about the compositions of the positive electrode **2,** the negative electrode **3,** the separator **4,** the battery case **1,** the resin sealant **5,** the negative electrode current collector **6,** and the negative electrode terminal plate **7** in order.

The positive electrode **2** contains a mixture of, for example, a positive electrode active material, such as powder of electrolytic manganese dioxide or the like, a conductive material, such as graphite powder, and an alkaline electrolyte. A binder, such as polyethylene powder or the like and a lubricant, such as stearate salt or the like may be added appropriately to the positive electrode **2.**

Referring to the negative electrode **3,** a material is used which is obtained in such a manner, for example, that an alkaline electrolyte is gelled by adding sodium polyacrylate or the like thereto and zinc alloy powder (a negative electrode active material) is dispersed in the thus obtained gelled alkaline electrolyte. In order to enhance the corrosion resistance of the negative electrode **3,** a metal compound having high hydrogen overvoltage, such as indium, bismuth, or the like may be added appropriately to the negative electrode **3.** In order to suppress generation of zinc dendrite, a slight amount of silicic acid or a silicon compound, such as siclicate may be added appropriately to the negative electrode **3.**

A material excellent in corrosion resistance is preferable as the zinc alloy powder of the negative electrode active material. In view of environment, any or none of mercury, cadmium, and lead is more preferable to be added to the zinc ally powder. The zinc alloy may contain indium of 0.01 to 0.1 weight %, bismuth of 0.005 to 0.02 weight %, and aluminum of 0.001 to 0.005 weight %, for example. The zinc alloy may contain any one or two or more kinds of the above alloy compositions.

The separator **4** may be a non-woven fabric mainly formed of polyvinyl alcohol fiber and rayon fiber, for example. The separator **4** may be obtained by a known method disclosed in Japanese Unexamined Patent Application Publication No. 6-163024 or Japanese Unexamined Patent Application Publication No. 2006-32320, for example.

The battery case **1** can be obtained by press-forming a nickel-plated steel plate into predetermined dimension and form by a known method disclosed in Japanese Unexamined Patent Application Publication No. 60-180058 or Japanese Unexamined Patent Application Publication No. 11-144690, for example.

A through hole (not shown) in which the negative electrode current collector **6** is to be press-inserted is formed in the central part of the resin sealant **5,** an annular thin member (not shown) serving as a safety valve is provided around the through hole, and an outer peripheral part (not shown) is formed continuously from the outer periphery of the annular thin member. The resin sealant **5** may be obtained by injection-molding nylon, polypropylene, or the like into a mold having predetermined dimension and form, for example.

The negative electrode current collector **6** can be obtained by pressing a wire made of silver, copper, brass or the like into a nail shape having a predetermined dimension. In order to exclude impurity and obtain masking effects, tin, indium, or the like is preferably plated on the surface of the negative electrode current collector **6.**

The negative electrode terminal plate **7** is provided with a terminal portion (not shown) for sealing the opening of the battery case **1** and a peripheral flange portion extending from the terminal portion (not shown) and being in contact with the resin sealant **5.** In the peripheral flange portion, a plurality of gas holes (not shown) are formed for allowing pressure to escape upon operation of the safety valve of the resin sealant **5.** The negative electrode terminal plate **7** can be obtained by press-forming a nickel-plated steel plate or a tin-plated steel plate into predetermined dimension and form.

The battery depolarizer will be described.

The battery depolarizer is any of an organic compound and an alkaline metal salt of the organic compound which have a depolarization function to both the positive electrode **2** and the negative electrode **3** and are capable of allowing $H^+$ and $OH^-$ to diffuse in the alkaline electrolyte even when the electrode reactions progress. This suppresses an increase in internal resistance of the alkaline dry battery and suppresses formation of a passivation layer on the surface of the negative electrode even when the electrode reactions progress. When the battery depolarizer is mixed with the alkaline electrolyte, deceleration of lowering of the positive electrode potential and acceleration of rising of the negative electrode potential retard in the discharge ending, and accordingly, the flatness of the maintaining voltage in the discharge ending enhances.

As the battery depolarizer, any of phosphoric acid esters expressed by Chemical formulae 1 and 2 may be used, or hydrocarbonated phosphoric acid expressed by Chemical formula 3 can be used. Any one of the compounds expressed by Chemical formulae 1 to 3 may be used, or two or more thereof may be used in combination.

(Chemical formula 1)

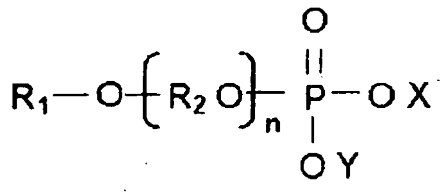

$R_1$ and $R_2$ are preferably any of aliphatic hydrocarbon groups. For example, $R_1$ is a hydrocarbon group of which carbon number is 1 to 4, both inclusive ($C_mH_{2m+1}$- ($1 \leq m \leq 4$), for example), and $R_2$ is $-CH_2CH_2-$ or $-CH(CH_3)CH_2-$. Further, n is preferably 1 to 8, both inclusive.

(Chemical formula 2)

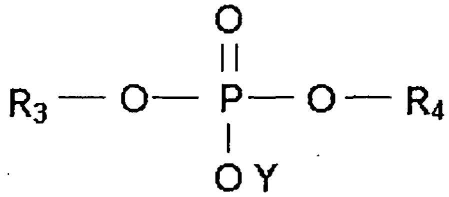

$R_3$ and $R_4$ are preferably any of a hydrogen atom and a hydrocarbon group of which carbon number is 1 to 6, both inclusive. In the case where each $R_3$ and $R_4$ is a hydrocarbon group, $R_3$ and $R_4$ are preferably any of aliphatic hydrocarbon groups wherein the total carbon number of $R_3$ and $R_4$ is preferably 1 to 6, both inclusive. For example, $R_3$ is $C_mH_{2m+1}$-, and $R_4$ is $C_nH_{2n+1}$-, wherein m and n are in the range between 0 and 6, both inclusive and (m+n) is in the range between 1 and 6, both inclusive.

(Chemical formula 3)

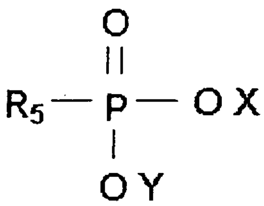

$R_5$ is preferably an aliphatic hydrocarbon group, for example, a hydrocarbon group of which carbon number is in the range between 1 and 6 ($C_nH_{2n+1}$-, wherein $1 \leq n \leq 6$, for example).

The above organic compounds as the depolarizers can allow $H^+$ and OH- to diffuse in the alkaline electrolyte even in the discharge ending in the alkaline dry battery of the present embodiment. In other words, polarization in both the positive electrode **2** and the negative electrode **3** can be suppressed even in the discharge ending. The reason thereof is uncertain, but it is clear that addition of any of the above organic compounds to the alkaline electrolyte suppresses polarization in both the positive electrode **2** and the negative electrode **3,** as can be understood from the later-described working examples. Further, the working examples prove that any of the organic compounds added to the alkaline electrolyte in only the amount range between 0 wt% exclusive and 1 wt% inclusive is suffice. The inventor confirmed that: a case of 1 wt% or more battery depolarizer mixed with the alkaline electrolyte shows no significant difference from a case of 1 wt% battery depolarizer mixed therewith.

Description will be given below about the alkaline dry battery of the present embodiment by comparison with the conventional alkaline dry battery and the alkaline dry battery disclosed in Japanese Unexamined Patent Application Publication (Translation of PCT Application) No. 08-510355 or Japanese Unexamined Patent Application Publication

(Translation of PCT Application) No. 2002-530815.

FIG. 2 is a graph schematically showing voltage characteristics of the conventional alkaline dry battery, the alkaline dry battery of the references, and the alkaline dry battery of the present embodiment. In FIG. **2,** the line **20** indicates the end voltage of the alkaline dry batteries (specifically 0.9 V), the lines **21, 22,** and **23** indicate the voltage characteristics of the conventional alkaline dry battery, the alkaline dry battery of the references, and the alkaline dry battery of the present embodiment, respectively.

In the conventional alkaline dry battery, polarization becomes severe as the electrode reactions progress to decelerate the electrode reactions. Accordingly, the positive electrode potential lowers while the negative electrode potential increases in the discharge ending to reduce the maintaining voltage.

In the alkaline dry battery of the references, in which an additive functions as a binder, the content of the positive electrode active material can be increased without increasing the volume of the positive electrode to increase the theoretical capacity of the positive electrode, thereby increasing the discharge capacity. Hence, the alkaline dry battery of the references has a lifetime longer than the conventional alkaline dry battery, as shown in FIG. **2.** The additive, however, does not function as a battery depolarizer, so that lowering of the maintaining voltage in the discharge ending cannot be suppressed in the alkaline dry battery of the references.

In contrast, the alkaline dry battery of the present embodiment, which contains the battery depolarizer in the alkaline electrolyte, allows $H^+$ and OH- to diffuse in the alkaline electrolyte even in the discharge ending. This suppresses lowering of the positive electrode potential and an increase in the negative electrode potential in the discharge ending to flatten the maintaining voltage in the discharge ending, as indicated by the line **23.** Hence, the alkaline dry battery of the present embodiment has a lifetime longer than the alkaline dry battery of the references.

Further, the additive in the alkaline dry battery of the references is an inorganic compound while the battery depolarizer in the present embodiment is an organic compound. Accordingly, the following effects are obtainable in the present embodiment.

In the alkaline dry battery of the references, the inorganic compound as the additive may be dissociated to ion and the dissociated ion may be bonded to another ion in the alkaline electrolyte. This inhibits the inorganic compound as the additive from being dispersed into the alkaline electrolyte. When the amount of the added inorganic compound is increased, the inorganic compound as the additive can be dispersed well in the alkaline electrolyte. The larger the amount of the added inorganic compound, the smaller the content of the active material. This accompanies reduction in the theoretical capacity of the alkaline dry battery.

Further, when the inorganic compound as the additive is dissociated to ion, the dissociated ion adheres to the surface of the positive electrode or the negative electrode to reduce the positive electrode active material in the positive electrode **2** or to form a local electrode in the negative electrode **3,** thereby inviting generation of gas.

In contrast, in the present embodiment, the organic compound as the battery depolarizer can be present stably in the alkaline electrolyte to suppress the above disadvantages.

Moreover, in the case where an alkaline metal salt of any of the organic compounds is used as the battery depolarizer, the alkaline metal salt is dissociated in the alkaline electrolyte, but the dissociated alkaline metal ion is not bonded to another ion and is present in the alkaline electrolyte stably. Thus, the use of an alkaline metal salt of any of the organic compounds as the battery depolarizer suppresses the above disadvantages. In other words, as far as X and Y in Chemical formulae 1 to 3 can be present stably as ions in the alkaline electrolyte, they are not limited to H, Na, and K.

In the case where an alkaline metal salt of any of the organic compounds is used as the battery depolarizer, the alkaline metal salt is dissociated to electrify the oxygen atom of the phosphoric acid group to minus. The negative charge thereof, however, flows to the hydrocarbon group, and the negative charge electrified to the oxygen atom of the phosphoric acid group is neutralized electrically by the hydrocarbon group. Thus, even when the battery depolarizer is locally electrified to plus or minus, the battery depolarizer is neutralized electrically as a whole to suppress bonding of the battery depolarizer to an ion pair, thereby suppressing the above disadvantages.

When the battery depolarizer is electrified to plus or minus as a whole, the battery depolarizer might be present locally in the surface of the negative electrode or the positive electrode. For this reason, the depolarizer electrified to plus or minus as a whole might be less dispersed in the alkaline electrolyte, and accordingly, it is difficult to suppress polarization in the positive electrode **2** and the negative electrode **3.** In view of this, the battery depolarizer is preferably designed to be electrically neutralized as a whole in the alkaline electrolyte.

The alkaline dry battery of the present embodiment has been described in view of the composition of the battery depolarizer while the following description will be given about the alkaline dry battery of the present embodiment in view of the battery performance (the flatness of the maintaining voltage in the discharge ending and the utilization of the positive electrode **2,** for example). LR6 and LR03 alkaline dry batteries will be referred to as the alkaline dry batteries of the present embodiment and will be described in order.

First, an LR6 alkaline dry battery will be described as the alkaline dry batter of the present embodiment.

The flatness of the maintaining voltage in the discharge ending will be focused on. In the alkaline dry battery of the present embodiment, when the closed circuit voltage is lower than the end voltage in the m-th cycle in repetition

of a discharge cycles where a current of 250 mA is discharged for one hour a day (hereinafter this test method is referred to as "250 mA intermittent discharge test), a difference between the closed circuit voltage $V_{i1}$ (volt) at the discharge start in the (m-1)-th cycle and the closed circuit voltage $V_{f1}$ (volt) at the discharge end in the (m-1)-th cycle satisfies:

$$0<(V_{i1}-V_{f1})\leq 0.35 \quad \ldots \text{(Expression 1)}$$

Wherein, "m" depends on the theoretical capacity of the positive electrode **2.** For example, when the theoretical capacity of the positive electrode **2** is in the range between 2635 mAh inclusive and 2750 mAh exclusive in the alkaline dry battery of the present embodiment, the closed circuit voltage becomes lower than the end voltage in the ninth cycle in the 250 mA intermittent discharge test (Working Examples 1 to 31 as will be described later), and therefore, $V_{i1}$ and $V_{f1}$ in Expression 1 are the closed circuit voltage at the discharge start in the eighth cycle and the closed circuit voltage at the discharge end in the eighth cycle, respectively.

As well, when the theoretical capacity of the positive electrode **2** is in the range between 2750 mAh inclusive and 2977 mAh exclusive in the alkaline dry battery of the present embodiment, the closed circuit voltage becomes lower than the end voltage in the tenth cycle in the 250 mA intermittent discharge test (Working Examples 32 to 49 as will be described later), and therefore, $V_{i1}$ and $V_{f1}$ in Expression 1 are the closed circuit voltage at the discharge start in the ninth cycle and the closed circuit voltage at the discharge end in the ninth cycle, respectively.

When the above test is performed on the conventional LR6 alkaline dry battery, the voltage difference in Expression 1 is approximately 0.5 V, which means that the flatness of the maintaining voltage in the discharge ending is enhanced in the LR6 alkaline dry battery of the present embodiment when compared with the conventional LR6 alkaline dry battery.

As to the utilization of the positive electrode **2,** when the theoretical capacity of the positive electrode active material of the alkaline dry battery of the present embodiment is 308 mAh/g (for example, when manganese dioxide is used as the positive electrode active material), the 250 mA intermittent discharge test on the alkaline dry battery results in that the utilization of the positive electrode **2** satisfies:

$$0.76\leq(250T/308C)\leq 0.86 \quad \ldots \text{(Expression 2).}$$

In Expression 2, T (hour) is an accumulated discharge duration until the closed circuit voltage becomes lower than the end voltage in the 250 mA intermittent discharge test, C (g) is a weight of the positive electrode active material of the positive electrode **2,** and the utilization of the positive electrode **2** is expressed by (250T/308C).

The above test performed on the conventional LR6 alkaline dry battery results in 0.72 or smaller utilization of the positive electrode **2,** which means that the utilization of the positive electrode **2** of the LR6 alkaline dry battery of the present embodiment increases when compared with that of the conventional LR6 alkaline dry battery.

The case where the alkaline dry battery of the present embodiment is an LR03 alkaline dry battery will be described next.

The flatness of the maintaining voltage in the discharge ending will be focused on. In the alkaline dry battery of the present embodiment, when the closed circuit voltage becomes lower than the end voltage in the n-th cycle in repetition of a discharge cycle where a current of 100 mA is discharged for one hour a day (hereinafter this test method is referred to as "100 mA intermittent discharge test), a difference between the closed circuit voltage $V_{i2}$ (volt) at the discharge start in the (n-1)-th cycle and the closed circuit voltage $V_{f2}$ (volt) at the discharge end in the (n-1)-th cycle satisfies:

$$0<(V_{i2}-V_{f2})\leq 0.35 \quad \ldots \text{(Expression 3)}$$

Wherein, "n" depends on the theoretical capacity of the positive electrode **2,** as described above. For example, in the alkaline dry battery of the present embodiment, when the theoretical capacity of the positive electrode **2** is in the range between 1236 mAh and 1359 mAh, both inclusive, the closed circuit voltage becomes lower than the end voltage in the twelfth cycle in the 100 mA intermittent discharge test (Working Examples 50 to 64 as will be described later), and therefore, $V_{i2}$ and $V_{f2}$ in Expression 3 are the closed circuit voltage at the discharge start in the eleventh cycle and the closed circuit voltage at the discharge end in the eleventh cycle, respectively.

When the above test is performed on the conventional LR03 alkaline dry battery, the voltage difference in

Expression 3 is approximately 0.5 V, which means that the flatness of the maintaining voltage in the discharge ending is enhanced in the LR03 alkaline dry battery of the present embodiment when compared with the conventional LR03 alkaline dry battery.

As to the utilization of the positive electrode **2,** when the theoretical capacity of the positive electrode active material of the alkaline dry battery of the present embodiment is 308 mAh/g (for example, when manganese dioxide is used as the positive electrode active material), the 100 mA intermittent discharge test on the alkaline dry battery results in that the utilization (100T/308C) of the positive electrode **2** satisfies:

$$0.84 \leq (100T/308C) \leq 0.92 \qquad \text{... (Expression 4).}$$

The above test performed on the conventional LR03 alkaline dry battery results in 0.72 or smaller utilization of the positive electrode **2,** which means that the utilization of the positive electrode **2** of the LR03 alkaline dry battery of the present embodiment increases when compared with that of the conventional LR03 alkaline dry battery.

The 250 mA intermittent discharge test was performed in accordance with IEC 60086-2, and the 100 mA intermittent discharge test was performed in accordance with ANSI C18.1M, Part 1-2005. Further, the closed circuit voltage ($V_{i1}$ and $V_{i2}$) at the start of each cycle is measured within 5 milliseconds from the instant when a load is applied.

The theoretical capacity and the utilization of the positive electrode **2** are calculated by the following methods.

The theoretical capacity of the positive electrode **2** can be calculated on the basis of the theoretical capacity of manganese dioxide, 308 mAh/g. For example, the theoretical capacity of the positive electrode **2** of an LR6 alkaline dry battery produced with the use of electrolyte manganese dioxide of 9.56 g having an purity of 91.7 % as the positive electrode active material is calculated by the following equation.

$$9.56 \times 0.917 \times 308 = 2700 \text{ mAh}$$

In the case where the 250 mA intermittent discharge test performed on an LR6 alkaline dry battery including the positive electrode **2** having the above structure results in 8.91-hour accumulated discharge duration until the end voltage becomes 0.9 V, the discharge capacity of the positive electrode **2** is calculated by the following equation.

$$8.91 \times 250 = 2228 \text{ mAh}$$

The utilization of the positive electrode **2** is a ratio of the discharge capacity to the theoretical capacity of the positive electrode **2.** Accordingly, in the above case, the utilization of the positive electrode **2** is calculated as (2228/2700 = 0.825).

As described above, in the alkaline dry battery of the present embodiment, lowering of the positive electrode potential and an increase in the negative electrode potential in the discharge ending are suppressed to enhance the flatness of the maintaining voltage in the discharge ending, thereby elongating the lifetime of the battery and increasing the utilization of the positive electrode **2.**

Further, in the alkaline dry battery of the present embodiment, polarization is suppressed in both the 250 mA intermittent discharge test and the 100 mA intermittent discharge test, which means that polarization can be suppressed even in intermittent use in a middle load range discharge.

The above alkaline dry battery can be produced by the following method. Namely, the positive electrode **2,** the negative electrode **3,** the separator **4,** and the alkaline electrolyte are prepared first; the battery depolarizer is mixed with the alkaline electrolyte; then, the positive electrode **2,** the separator **4,** the alkaline electrolyte, and the negative electrode **3** are inserted in the battery case **1** in this order. The alkaline electrolyte may not be prepared separately, but the battery depolarizer may be mixed with the respective active materials and the material of the alkaline electrolyte when the positive electrode **2** and the negative electrode **3** are prepared. Alternatively, the battery depolarizer may be applied onto the surface of the separator **4.**

The present embodiment may have any of the following aspects.

$R_1$ to $R_4$ in Chemical formula 1 to Chemical formula 3 are any of aliphatic hydrocarbon groups and may include a double bond or in the form of a chain or be branched. $R_1$ to $R_4$ may be $CH_3CH_2CH(CH_3)$-, $CH_3CH=CHCH_2$- or the like, for example, and are not limited specifically only if the carbon numbers thereof fall in the above respective ranges.

The structure of the alkaline dry battery is not limited to that shown in FIG. **1.**

The materials of the positive electrode, the negative electrode, the separator, and the alkaline electrolyte are not limited to the above materials.

[Working Examples]

In the working examples, the alkaline dry batteries as shown in FIG. **1** were produced, and the 250 mAh intermittent discharge test and the 100 mAh intermittent discharge test were performed on the thus produced alkaline dry batteries.
First, the alkaline dry batteries were produced by the following method.

<1> Preparation of alkaline electrolyte

Potassium hydroxide, zinc oxide, and water were mixed at a weight ratio of 35:2:63 to obtain an alkaline electrolyte.

<2> Formation of positive electrode **2**

First, electrolytic manganese dioxide (hereinafter referred to it merely as "EMD") and graphite were mixed at a predetermined weight ratio. The thus prepared mixture was mixed with the alkaline electrolyte at a weight ratio of 100: 2, was stirred sufficiently, and was then compressed to be a flake shape. Then, the flake-shaped compressed positive electrode was crushed to be in the form of grains and was classified by a sieve of 10 to 100 meshes for selection. The thus grained positive electrode is press-formed into a hollowed cylindrical form to obtain a pellet-shaped positive electrode **2** having predetermined dimension and weight.
As the EMD, EMD of which manganese dioxide has a purity of 91.7 weight % and of which average grain diameter is 38 μm was used. Graphite used has an average grain diameter of 17 μm.

<3> Formation of negative electrode **3**

Sodium polyacrylate powder was used as a gelling agent. This gelling agent, the alkaline electrolyte, and zinc alloy powder are mixed at a weight ratio of 0.8:33.6:65.6 to obtain a negative electrode **3.**
As the zinc alloy powder, one was used which contains indium of 0.020 weight %, bismuth of 0.010 weight %, and aluminum of 0.004 weight %, which has a mean volume diameter is 160 μm, and which includes particles of 35 % having a grain diameter of equal to or smaller than 75 μm.

<4> Assembly of alkaline dry battery

First, two positive electrodes **2** obtained as above were inserted in the battery case **1,** and pressure was applied to the positive electrodes **2** by a pressure applying jig to allow the positive electrodes **2** to adhere and be fitted to the inner wall of the battery case **1.** The battery case **1** having an outer diameter of 13.90 mm and a side thickness of 0.18 mm was used.
Next, the cylindrical bottomed separator **4** was inserted into the hollowed part of the positive electrodes **2** adhering to the inner wall of the battery case **1.**
Subsequently, the alkaline electrolyte of a predetermined weight was injected into the separator **4.** After injection thereof for 15 minutes, the negative electrode 3 of a predetermined weight obtained as above was filled into the separator **4.** As the separator **4,** a non-woven fabric of which main materials are polyvinyl alcohol fiber and rayon fiber was used.
After the opening of the battery case **1** was sealed by the assembly sealant **9,** the battery case **1** was covered with the label **8** to thus obtain an alkaline dry battery as shown in FIG. **1.**
In the methods described in the above sections <1> to <4>, the predetermined weight ratio, the predetermined dimension and weight, and the predetermined weight will be described in the following working examples and the comparative example.

<Working Example 1 and Comparative Example 1>

Compound 1 expressed by Chemical formula 4 was synthesized by an esterification reaction of alkyl polyoxyethylene alcohol and phosphoric acid.

(Chemical formula 4)

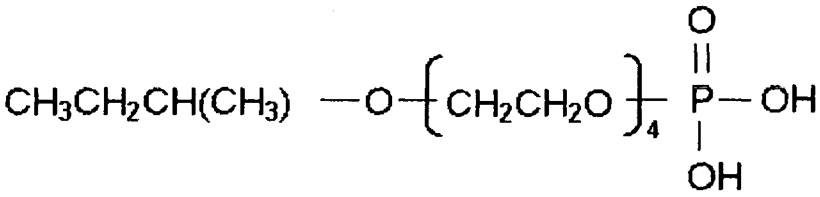

The compound expressed by Chemical formula 4 is one of the organic compounds expressed by Chemical formula 1.

In Working Example 1, in preparation of the alkaline electrolyte in the above section <1>, Compound 1 was added to the alkaline electrolyte so as to be 0.5 weight % and was stirred sufficiently for solution.

Then, with the use of the thus obtained alkaline electrolyte, LR6 alkaline dry batteries were produced by the method described in the above sections <2> to <4> under predetermined conditions indicated in Table 1.

As Comparative Example 1, an LR6 alkaline dry battery was prepared by the same method as above except that an alkaline electrolyte to which nothing was added was prepared.

In Working Example 1 and Comparative Example 1, the pellet-shaped positive electrodes **2** having an outer diameter of 13.40 mm, an inner diameter of 9.15 mm, a height of 22.00 mm, and a weight of 5.30 g were prepared by mixing EMD and graphite at a weight ratio of 92:8. The weight of the alkaline electrolyte injected to the separator **4** was 1.60 g, and the amount of the negative electrode **3** filled therein was 6.40 g. The theoretical capacity of the positive electrode **2** was 2700 mAh.

The 250 mA intermittent discharge test was performed on the LR6 alkaline dry batteries of Working Example 1 and Comparative Example 1. In the seventh to ninth discharge cycles, which correspond to the discharge ending, both the positive electrode potential and the negative electrode potential were measured.

The results are indicated in Table 1 and FIG. **3.** FIG. **3** is an explanatory drawing showing each transition of the discharge maintaining voltage and the single electrode potential of the alkaline dry batteries of Working Example 1 and Comparative Example 1. In FIG. 3, the bold lines indicate the voltage and the potential of the alkaline dry battery of Working Example 1 while the fine lines indicate those of Comparative Example 1.

In Table 1, "V1" is a closed circuit voltage of a alkaline dry battery at the start of the eighth discharge cycle, "V2" is a closed circuit voltage of the alkaline dry battery at the end of the eight discharge cycle, and "V1-V2" means a difference between V1 and V2 as a voltage difference in the above Expression 1.

The "discharge duration" means an accumulated discharge time period until the maintaining voltage of an alkaline dry battery in discharge becomes lower than the end voltage (0.9 V).

The "utilization of positive electrode" means a value obtained by multiplying the discharge duration by 250 (mA) and dividing it by the theoretical capacity of the positive electrode **2.**

Table 1

| | LR6 alkaline dry battery | | |
|---|---|---|---|
| | V1-V2 (V) | Discharge duration (hour) | Utilization of positive electrode (%) |
| Working Example 1 | 0.288 | 8.91 | 82.5 |
| Comparative Example 1 | 0.618 | 7.72 | 71.5 |

Referring to "V1-V2," Working Example 1 shows approximately 15 % enhancement of the middle load range intermittent discharge characteristic when compared with that in Comparative Example 1. The reason thereof might be that: Compound 1 remarkably retards lowering of the positive electrode potential and an increase in the negative electrode potential in the discharge ending, as can be cleared from the characteristics of the single electrode potential shown in FIG. **3.** In other words, Compound 1 functions as a battery depolarizer for both the positive electrode **2** and the negative electrode **3** to reduce polarization in the discharge ending remarkably.

Specifically, as indicated in Table 1, "VI-V2" in Comparative Example 1 is 0.618 V while it is 0.288 V in Working Example 1, which means that addition of Compound 1 to the alkaline electrolyte reduces the voltage difference remarkably. Hence, the flatness of the maintaining voltage in the discharge ending was enhanced in Working Example 1 when compared with Comparative Example 1.

As to the utilization of the positive electrode **2,** approximately 10 % increase was observed in the middle load range intermittent discharge.

<Working Examples 2 to 8 and Comparative Examples 2 and 3>

Polyoxyethylene alkyl ether phosphoric acid ester expressed by Chemical formula 5 was obtained by an esterification reaction of alkyl alcohol, polyethylene glycol, and phosphoric acid.

(Chemical formula 5)

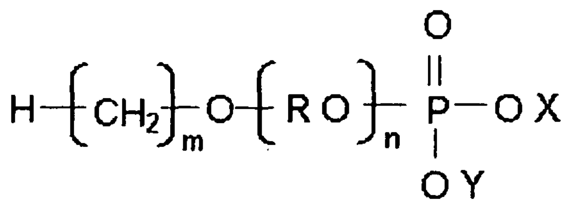

In Chemical formula 5, R is $-CH_2CH_2-$ or $-CH(CH_3)CH_2-$.

The compound expressed by Chemical formula 5 is an organic compound expressed by Chemical formula 1 or an alkaline metal salt thereof.

Compounds 2 to 10 were prepared by changing m, n, X, and Y as structural parameters in Chemical formula 5 as indicated in Table 2 by changing the polymerization degree of ethylene glycol in polyethylene glycol, the carbon number of the alkyl group in alkyl alcohol, and the kind of the salt for neutralizing the phosphoric acid group.

For example, Compound 1 in Working Example 1 was a compound prepared with m, n, X, and Y set to 4, 1, H, and H (hydrogen atom), respectively, in Chemical formula 5.

Subsequently, in preparation of the alkaline electrolyte as in the above section <1>, any of Compounds 2 to 10 was added to the alkaline electrolyte so as to be 0.5 weight % and stirred sufficiently for solution or dispersion. Then, LR6 alkaline dry batteries were produced by the same method as in Working Example 1 and then were subjected to the 250 mA intermittent discharge test. Each theoretical capacity of the positive electrodes 2 of the alkaline dry batteries of Working Examples 2 to 8 and Comparative Examples 2 and 3 was calculated as 2700 mAh from Expression A:

$$5.3x2x\{92/(92+8+2)\}x0.917x308 = 2700 \qquad \ldots \text{Expression A}$$

The alkaline dry batteries of Working Examples 2 to 8 and Comparative Examples 2 and 3 each included two pellet-shaped positive electrodes **2** each containing EMD, graphite, and the electrolyte at a ratio of 92:8:2. This means that the alkaline dry batteries of Working Examples 2 to 8 and Comparative Examples 2 and 3 each contains manganese dioxide of 5.3x2{92/(92+8+2)} g.

The results are indicated in Table 2.

Table 2

| | Compound added to alkaline electrolyte | | | | | LR6 alkaline dry battery | | |
|---|---|---|---|---|---|---|---|---|
| | Compound No. | Structural parameter | | | | V1-V2 (V) | Discharge duration (hour) | Utilization of positive electrode(%) |
| | | m | n | X | Y | | | |
| W E 1 | Compound 1 | 4 | 1 | H | H | 0.288 | 8.91 | 82.5 |
| WE 2 | Compound 2 | 4 | 1 | Na | Na | 0.279 | 8.93 | 82.7 |
| WE 3 | Compound 3 | 4 | 1 | K | K | 0.285 | 8.86 | 82.0 |
| WE4 | Compound 4 | 1 | 1 | Na | Na | 0.296 | 8.83 | 81.8 |

(continued)

| | Compound added to alkaline electrolyte | | | | | LR6 alkaline dry battery | | |
|---|---|---|---|---|---|---|---|---|
| | Compound No. | Structural parameter | | | | V1-V2 (V) | Discharge duration (hour) | Utilization of positive electrode(%) |
| | | m | n | X | Y | | | |
| WE 5 | Compound 5 | 1 | 8 | Na | Na | 0.312 | 8.85 | 81.9 |
| WE 6 | Compound 6 | 2 | 4 | H | Na | 0.294 | 8.87 | 82.1 |
| WE 7 | Compound 7 | 4 | 4 | Na | Na | 0.319 | 8.79 | 81.4 |
| WE 8 | Compound 8 | 4 | 8 | Na | Na | 0.327 | 8.71 | 80.6 |
| CE 2 | Compound 9 | 2 | 10 | Na | Na | 0.546 | 7.83 | 72.5 |
| CE 3 | Compound 10 | 8 | 4 | Na | Na | 0.471 | 7.94 | 73.5 |
| CE 1 | - | | | | | 0.618 | 7.72 | 71.5 |

As indicated in Table 2, "V1-V2" remarkably reduced and the discharge duration and the utilization of the positive electrode **2** increased approximately 10 % in Working Examples 1 to 8 when compared with those in Comparative Examples 1 to 3. The reason might be that: Compounds 1 to 8 function as battery depolarizers for both the positive electrode **2** and the negative electrode **3.** Accordingly, in Working Examples 1 to 8, lowering of the maintaining voltage in the discharge ending was suppressed, thereby suppressing lowering of the output characteristics of the alkaline dry batteries.

In Compounds 2 and 3, which have the same skeletal structure as Compound 1, though the hydrogen atoms in the phosphoric acid were substituted by the alkaline metal atoms (Na or K), no significant difference in battery characteristics was observed between the alkaline dry batteries even after neutralization with the alkaline metal salt, as indicated in Working Examples 1 to 3. In other words, the alkaline metal salt of Compound 1 suppressed polarization in both the positive electrode **2** and the negative electrode **3** of the alkaline dry batteries.

Referring to Compound 9 and 10, no significant effect was obtained as indicated in Comparative Examples 2 and 3. The reason might be that: the principal chain of the organic compound or an alkaline metal salt of the organic compound becomes long as m and n are increased, and therefore, movement or diffusion of the battery depolarizer in the alkaline electrolyte is inhibited. Accordingly, it is preferable that m is in the range between 1 and 4, both inclusive, while n is in the range between 1 and 8, both inclusive, in Chemical formula 5.

<Working Examples 9 to 16 and Comparative Examples 4 to 6>

Phosphoric acid ester expressed by Chemical formula 6 was obtained by an esterification reaction of alkyl alcohol and phosphoric acid.

(Chemical formula 6)

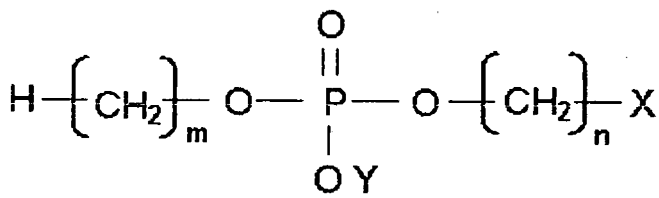

The compound expressed by Chemical formula 6 is an organic compound expressed by Chemical formula 2 or an alkaline metal salt thereof.

Compounds 11 to 21 were prepared by changing m, n, m+n, X, and Y as structural parameters in Chemical formula 6 as indicated in Table 3 by changing the carbon number of the alkyl group in alkyl alcohol and the kind of the salt for neutralizing the phosphoric acid group.

Subsequently, in preparation of the alkaline electrolyte in the above section <1>, any of Compounds 11 to 21 was added to the alkaline electrolyte so as to be 0.5 weight % and stirred sufficiently for solution. Then, LR6 alkaline

dry batteries were produced by the same method as in Working Example 1 and were then subjected to the 250 mA intermittent discharge test. Each theoretical capacity of the positive electrodes **2** of the alkaline dry batteries of Working Examples 9 to 16 and Comparative Examples 4 to 6 was calculated as 2700 mAh.

The results are indicated in Table 3.

Table 3

| | Compound added to alkaline electrolyte | | | | | | LR6 alkaline dry battery | | |
|---|---|---|---|---|---|---|---|---|---|
| | Compound No. | Structural parameter | | | | | V1-V2 (V) | Discharge duration (hour) | Utilization of positive electrode (%) |
| | | m | n | m+n | X | Y | | | |
| WE 9 | Compound 11 | 0 | 0 | 0 | H | H | 0.271 | 8.85 | 81.9 |
| WE 10 | Compound 12 | 1 | 1 | 2 | H | H | 0.286 | 8.82 | 81.7 |
| WE 11 | Compound 13 | 2 | 2 | 4 | H | Na | 0.254 | 8.90 | 82.4 |
| WE 12 | Compound 14 | 2 | 4 | 6 | H | H | 0.303 | 8.79 | 81.4 |
| WE 13 | Compound 15 | 2 | 4 | 6 | Na | Na | 0.311 | 8.69 | 80.5 |
| WE 14 | Compound 16 | 2 | 4 | 6 | H | Na | 0.306 | 8.75 | 81.0 |
| WE 15 | Compound 17 | 2 | 4 | 6 | K | K | 0.297 | 8.86 | 82.0 |
| WE 16 | Compound 18 | 4 | 2 | 6 | Na | Na | 0.316 | 8.65 | 80.1 |
| CE 4 | Compound 19 | 4 | 4 | 8 | Na | Na | 0.416 | 7.93 | 73.4 |
| CE 5 | Compound 20 | 0 | 8 | 8 | Na | Na | 0.585 | 7.76 | 71.9 |
| CE 6 | Compound 21 | 8 | 0 | 8 | Na | Na | 0.503 | 7.80 | 72.2 |
| CE 1 | | | | | | | 0.618 | 7.72 | 71.5 |

As indicated in Table 3, "V1-V2" remarkably reduced and the discharge duration and the utilization of the positive electrode **2** increased approximately 10 % in Working Examples 9 to 16 when compared with those in Comparative Example 1. The reason might be that: Compounds 11 to 18 function as battery depolarizers for both the positive electrode 2 and the negative electrode **3.** Accordingly, in Working Examples 9 to 16, the flatness of the maintaining voltage in the discharge ending was enhanced.

In Compounds 15 and 17, which have the same skeletal structure as Compound 14, though the hydrogen atoms in the phosphoric acid were substituted by the alkaline metal atoms (Na or K), no significant difference in battery characteristics was observed between the alkaline dry batteries even after neutralization with the alkaline metal salt, as indicated in Working Examples 12 to 15. In other words, the alkaline metal salt of Compound 14 suppresses polarization in both the positive electrode 2 and the negative electrode 3 of the alkaline dry batteries.

Further, Working Example 9, which includes no hydrocarbon group as a principal chain (Compound 11), attains the similar effects.

In contrast, no significant effect was obtained in Comparative Example 4. The reason might be that: the principal chain of an organic compound or an alkaline metal salt of an organic compound becomes long as m and n are increased, and therefore, movement or diffusion of the battery depolarizer in the alkaline electrolyte is inhibited. Accordingly, it is preferable that m+n is equal to or smaller than 6.

As well, no significant effect was obtained in Comparative Examples 5 and 6. The reason might be following. When viewing the phosphoric acid group in Compounds 20 and 21, some of the hydrogen atoms are bonded to the hydrocarbon group while the other hydrogen atoms is bonded to only the hydrogen atoms; this lose the electron balance of the principal chain of the organic compound to allow the battery depolarizer to be electrified to plus or minus as a whole, thereby inviting local presence of Compound 20 or 21 in the surface of the positive electrode **2** or of the negative electrode **3;** accordingly, the battery depolarizer can exhibit the depolarizing function in only one of the positive electrode **2** and the negative electrode **3.**

Accordingly, it is preferable that m and n are in the range between 1 and 6, both inclusive, and m+n is in the range between 1 and 6, both inclusive.

<Working Examples 17 to 22>

Compounds 22 to 27 were prepared by changing n, X, and Y as structural parameters in Chemical formula 7 as indicated in Table 4 by changing the ethylation reaction of phosphoric acid and the kind of the salt for neutralizing the phosphoric acid group.

(Chemical formula 7)

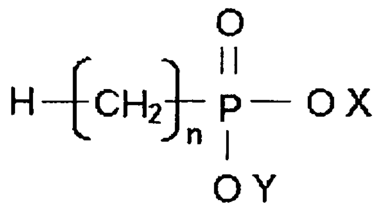

The compound expressed by Chemical formula 7 is an organic compound expressed by Chemical formula 3 or an alkaline metal salt thereof.

Subsequently, in preparation of the alkaline electrolyte in the above section <1>, any of Compounds 22 to 27 was added to the alkaline electrolyte so as to be 0.5 weight % and stirred sufficiently for solution. Then, LR6 alkaline dry batteries were produced by the same method as in Working Example 1 and were then subjected to the 250 mA intermittent discharge test. Each theoretical capacity of the positive electrodes **2** of the alkaline dry batteries of Working Examples 17 to 22 was calculated as 2700 mAh.

The results are indicated in Table 4.

Table 4

| | Compound added to alkaline electrolyte | | | | LR6 alkaline dry battery | | |
|---|---|---|---|---|---|---|---|
| | Compound No. | Structural parameter | | | V1-V2 (V) | Discharge duration (hour) | Utilization of positive electrode (%) |
| | | n | X | Y | | | |
| WE 17 | Compound 22 | 1 | Na | Na | 0.278 | 8.83 | 81.8 |
| WE 18 | Compound 23 | 4 | Na | Na | 0.272 | 8.88 | 82.2 |
| WE 19 | Compound 24 | 4 | H | Na | 0.286 | 8.79 | 81.4 |
| WE 20 | Compound 25 | 4 | H | H | 0.294 | 8.76 | 81.1 |
| WE 21 | Compound 26 | 4 | K | K | 0.303 | 8.77 | 81.2 |
| WE 22 | Compound 27 | 6 | Na | Na | 0.315 | 8.69 | 80.5 |
| CE 1 | - | | | | 0.618 | 7.72 | 71.5 |

As indicated in Table 4, "V1-V2" remarkably reduced and the discharge duration and the utilization of the positive electrode **2** increased approximately 10 % in Working Examples 17 to 22 when compared with those in Comparative Example 1. The reason might be that: Compounds 22 to 27 function as battery depolarizers for both the positive electrode **2** and the negative electrode **3.** Accordingly, in Working Examples 17 to 22, the flatness of the maintaining voltage in the discharge ending was enhanced.

In Compounds 23, 24, and 26, which have the same skeletal structure as Compound 25, though the hydrogen atoms in the phosphoric acid were substituted by the alkaline metal atoms (Na or K), no significant difference in battery characteristics was observed between the alkaline dry batteries even after neutralization with the alkaline metal salt, as indicated in Working Examples 18 to 21. In other words, the alkaline metal salt of Compound 25 suppresses polarization in both the positive electrode **2** and the negative electrode **3** of the alkaline dry batteries.

When n is in the range between 1 and 6, both inclusive, in Chemical formula 7, polarization in both the positive electrode **2** and the negative electrode **3** was suppressed with less or no influence of the length of the principal chain of and the polarity of the organic compound received

In Working Examples 1 to 22, the intermittent discharge test was performed on the LR6 alkaline dry batteries

having the positive electrodes **2** of which theoretical capacities are the same, 2700 mAh. While in the following Working Examples 23 to 64, intermittent discharge tests were performed on respective alkaline dry batteries of which the positive electrodes **2** have theoretical capacities different from one another. Wherein, the intermittent discharge test was performed on the LR6 alkaline dry batteries of Working Examples 23 to 49 and on the LR03 alkaline dry batteries of Working Examples 50 to 64.

<Working Examples 23 to 49 and Comparative Examples 7 to 9>

First, in preparation of the alkaline electrolyte in the above section <1>, alkaline electrolytes were prepared with the use of Compounds 2, 13, and 23 under the various conditions indicated in Table 5. Then, LR6 alkaline dry batteries were produced by the same method as in the section <2> to <4> under the various conditions indicated in Table 5 and then were subjected to the 250 mA intermittent discharge test.

In each of Working Examples 23 to 31 and Comparative Example 7, pellet-shaped positive electrodes **2** having an outer diameter of 13.40 mm, an inner diameter of 9.30 mm, a height of 22.00 mm, and a weight of 5.20 g were prepared by mixing EMD and graphite at a weight ratio of 91.5:8.5. The weight of the alkaline electrolyte injected to the separator **4** was 1.60 g, and the amount of the negative electrode **3** filled therein was 6.40 g. Each theoretical capacity of the positive electrodes **2** was 2635 mAh in the alkaline dry batteries.

In each of Working Examples 32 to 40 and Comparative Example 8, pellet-shaped positive electrodes 2 having an outer diameter of 13.40 mm, an inner diameter of 9.10 mm, a height of 22.00 mm, and a weight of 5.35 g were prepared by mixing EMD and graphite at a weight ratio of 92.8:7.2. The weight of the alkaline electrolyte injected to the separator **4** was 1.60 g, and the amount of the negative electrode **3** filled therein was 6.35 g. Each theoretical capacity of the positive electrodes **2** was 2750 mAh in the alkaline dry batteries.

Further, in each of Working Examples 41 to 49 and Comparative Example 9, pellet-shaped positive electrodes **2** having an outer diameter of 13.40 mm, an inner diameter of 8.90 mm, a height of 22.00 mm, and a weight of 5.60 g were prepared by mixing EMD and graphite at a weight ratio of 96.0:4.0. The weight of the alkaline electrolyte injected to the separator **4** was 1.58 g, and the amount of the negative electrode **3** filled therein was 6.10 g. Each theoretical capacity of the positive electrodes **2** was 2977 mAh in the alkaline dry batteries.

The results are indicated in Table 5.

Table 5

| | Alkaline electrolyte | | Positive electrode | LR6 alkaline dry battery | | | |
|---|---|---|---|---|---|---|---|
| | Compound No. | Addition rate (wt%) | Theoretical capacity (mAh) | V1-V2 (V) | V-V4 (V) | Discharge duration (hour) | Utilization of positive electrode (%) |
| WE 23 | Compound 2 | 0.1 | 2635 | 0.346 | - | 8.24 | 78.2 |
| WE 24 | Compound 13 | 0.1 | 2635 | 0.325 | | 8.34 | 79.1 |
| WE 25 | Compound 23 | 0.1 | 2635 | 0.350 | | 8.09 | 76.8 |
| WE 26 | Compound 2 | 0.5 | 2635 | 0.286 | | 8.50 | 80.6 |
| WE 27 | Compound 13 | 0.5 | 2635 | 0.301 | | 8.41 | 79.8 |
| WE 28 | Compound 23 | 0.5 | 2635 | 0.281 | | 8.60 | 81.6 |
| WE 29 | Compound 2 | 1.0 | 2635 | 0.250 | | 8.87 | 84.2 |
| WE 30 | Compound 13 | 1.0 | 2635 | 0.259 | | 8.79 | 83.4 |
| WE 31 | Compound 23 | 1.0 | 2635 | 0.268 | | 8.80 | 83.5 |
| CE 7 | - | | 2635 | 0.715 | | 7.10 | 67.4 |
| WE 1 | Compound 1 | 0.5 | 2700 | 0.288 | - | 8.91 | 82.5 |

(continued)

| | Alkaline electrolyte | | Positive electrode | LR6 alkaline dry battery | | | |
|---|---|---|---|---|---|---|---|
| | Compound No. | Addition rate (wt%) | Theoretical capacity (mAh) | V1-V2 (V) | V-V4 (V) | Discharge duration (hour) | Utilization of positive electrode (%) |
| CE 1 | - | | 2700 | 0.618 | - | 7.72 | 71.5 |
| WE 32 | Compound 2 | 0.1 | 2750 | - | 0.291 | 9.25 | 84.1 |
| WE 33 | Compound 13 | 0.1 | 2750 | - | 0.317 | 9.15 | 83.2 |
| WE 34 | Compound 23 | 0.1 | 2750 | - | 0.301 | 9.19 | 83.6 |
| WE 35 | Compound 2 | 0.5 | 2750 | - | 0.269 | 9.35 | 85.0 |
| WE 36 | Compound 13 | 0.5 | 2750 | - | 0.281 | 9.32 | 84.7 |
| WE 37 | Compound 23 | 0.5 | 2750 | - | 0.283 | 9.37 | 85.2 |
| WE 38 | Compound 2 | 1.0 | 2750 | - | 0.261 | 9.42 | 85.7 |
| WE 39 | Compound 13 | 1.0 | 2750 | - | 0.270 | 9.39 | 85.4 |
| WE 40 | Compound 23 | 1.0 | 2750 | - | 0.250 | 9.46 | 86.0 |
| CE 8 | - | | 2750 | 0.368 | 0.656 | 8.09 | 73.6 |
| WE 41 | Compound 2 | 0.1 | 2977 | - | 0.298 | 9.35 | 78.5 |
| WE 42 | Compound 13 | 0.1 | 2977 | - | 0.325 | 9.21 | 77.3 |
| WE 43 | Compound 23 | 0.1 | 2977 | - | 0.350 | 9.05 | 76.0 |
| WE 44 | Compound 2 | 0.5 | 2977 | - | 0.316 | 9.75 | 81.9 |
| WE 45 | Compound 13 | 0.5 | 2977 | - | 0.321 | 9.59 | 80.5 |
| WE 46 | Compound 23 | 0.5 | 2977 | - | 0.291 | 9.82 | 82.5 |
| WE 47 | Compound 2 | 1.0 | 2977 | - | 0.263 | 9.96 | 83.6 |
| WE 48 | Compound 13 | 1.0 | 2977 | - | 0.253 | 9.97 | 83.7 |
| WE 49 | Compound 23 | 1.0 | 2977 | - | 0.276 | 9.89 | 83.0 |
| CE 9 | - | | 2977 | 0.356 | 0.689 | 8.91 | 74.8 |

In table 5, "V3" is a closed circuit voltage of an alkaline dry battery at the start of the ninth discharge cycle, "V4" is a closed circuit voltage of the alkaline dry battery at the end of the ninth discharge cycle, and "V3-V4"means a difference thereof and is a voltage difference in Expression 1. The other terms in Table 5 are the same as those in Table 1, and therefore, the description thereof is omitted.

Comparative Examples 1 and 7 to 9 will be discussed first.

In Comparative Examples 1 and 7, the theoretical capacities of the positive electrodes 2 were in the range between 2635 mAh inclusive and 2750 mAh exclusive, and the discharge durations were shorter than eight hours. This

proves that in Comparative Examples 1 and 7: the maintaining voltage became lower than the end voltage, 0.9 V in the eighth cycle; the polarization (V1-V2) at that time was in the range between 0.618 and 0.715 V; and voltage drop in the discharge ending was significant.

In Comparative Examples 8 and 9, the theoretical capacities of the positive electrodes **2** were in the range between 2750 mAh and 2977 mAh, both inclusive, and the discharge durations were over eight hours. This proves that in Comparative Examples 8 and 9: the maintaining voltage became lower than the end voltage, 0.9 V in the ninth cycle; the polarization (V3-V4) at that time was in the range between 0.656 and 0.689 V; and voltage drop in the discharge ending was significant. The polarization (V1-V2) in the eighth cycle was 0.356 to 0.368 V.

With the above results taken into consideration, the polarization and the utilization of the positive electrode **2** will be discussed below in the respective cases where the theoretical capacity of the positive electrode **2** is between 2635 mAh inclusive and 2750 mAh exclusive and where it is in the range between 2750 mAh and 2977 mAh, both inclusive.

First, each polarization (V1-V2) and (V3-V4) will be discussed.

In each of Working Examples 1 and 23 to 31, the maintaining voltage exceeded the end voltage, 0.9 V in the eighth cycle and the discharge duration was over eight hours. This might be because the polarization (V1-V2) in the eighth cycle is 0.250 to 0.350 V, which means remarkable suppression when compared with that in Comparative Examples 1 and 7.

In Working Examples 32 to 49, the same can be applied. In detail, in each of Working Examples 32 to 49, the maintaining voltage exceeded the end voltage, 0.9 V in the ninth cycle and the discharge duration was over nine hours. This might be because the polarization (V3-V4) in the ninth cycle is 0.250 to 0.350 V, which means remarkable suppression when compared with that in Comparative Examples 8 and 9.

The above results prove that when the theoretical capacities of the positive electrodes **2** are the same, addition of a battery polarizer in the present invention to the alkaline electrolyte suppresses (V1-V2) and (V3-V4) to a half or more. This leads to suppression of lowering of the maintaining voltage in the discharge ending and to enhancement of the middle load range intermitted discharge characteristics.

The inventors confirmed that addition of 0.1 weight % or smaller battery depolarizer of the present invention attains effects corresponding to the added amount thereof and that no significant difference in obtainable effects was observed between the case where the added amount thereof exceeds 1.0 weight % and the case where the added amount thereof is 1.0 weight %.

The utilization of the positive electrode **2** will be discussed next.

The utilization of the positive electrode **2** increased 10 % or more in each of Working Examples 1 and 23 to 49 when compared with that in Comparative Examples 1 and 7 to 9. Specifically, the utilization of the positive electrodes **2** was 67.4 to 74.8 % in Comparative Examples 1 and 7 to 9 while it was 76.0 to 86.0 in Working Examples 1 and 23 to 49.

<Working Examples 50 to 64 and Comparative Examples 10 to 14>

First, in preparation of the alkaline electrolyte in the above section <1>, alkaline electrolytes were prepared with the use of Compounds 2, 13, and 23 under the various conditions indicated in Table 6 by the method described in the above section <1>. No compound is added to the alkaline electrolytes in Comparative Examples 10 to 14. Then, LR03 alkaline dry batteries were produced by the method described in the sections <2> to <4> with the use of the thus prepared alkaline electrolytes under the various conditions indicated in Table 6 and were then subjected to the 100 mA intermittent discharge test.

In each of the alkaline dry batteries in Working Examples 50 to 54 and Comparative Example 11, pellet-shaped positive electrodes 2 having an outer diameter of 9.70 mm, an inner diameter of 6.65 mm, a height of 19.95 mm, and a weight of 2.40 g were prepared by mixing EMD and graphite at a weight ratio of 93.0:7.0. The weight of the alkaline electrolyte injected to the separator **4** was 0.72 g, and the amount of the negative electrode **3** filled therein was 2.85 g. Each theoretical capacity of the positive electrodes **2** was 1236 mAh in the alkaline dry batteries.

In each of the alkaline dry batteries in Working Examples 55 to 59 and Comparative Example 12, pellet-shaped positive electrodes **2** having an outer diameter of 9.70 mm, an inner diameter of 6.45 mm, a height of 19.95 mm, and a weight of 2.55 g were prepared by mixing EMD and graphite at a weight ratio of 93.4:6.6. The weight of the alkaline electrolyte injected to the separator **4** was 0.700 g, and the amount of the negative electrode 3 filled therein was 2.73 g. Each theoretical capacity of the positive electrodes 2 was 1319 mAh in the alkaline dry batteries.

In each of the alkaline dry batteries in Working Examples 60 to 64 and Comparative Example 13, pellet-shaped positive electrodes **2** having an outer diameter of 9.70 mm, an inner diameter of 6.35 mm, a height of 19.95 mm, and a weight of 2.61 g were prepared by mixing EMD and graphite at a weight ratio of 94.0:6.0. The weight of the alkaline electrolyte injected to the separator **4** was 0.70 g, and the amount of the negative electrode **3** filled therein was 2.65 g. Each theoretical capacity of the positive electrodes **2** was 1359 mAh in the alkaline dry batteries.

In Comparative Example 10, pellet-shaped positive electrodes **2** having an outer diameter of 9.70 mm, an inner diameter of 6.65 mm, a height of 19.95 mm, and a weight of 2.39 g were prepared by mixing EMD and graphite at a

weight ratio of 92.0:8.0. The weight of the alkaline electrolyte injected to the separator **4** was 0.72 g, and the amount of the negative electrode **3** filled therein was 2.85 g. Each theoretical capacity of the positive electrodes **2** was 1218 mAh in the alkaline dry batteries.

In Comparative Example 14, pellet-shaped positive electrodes **2** having an outer diameter of 9.70 mm, an inner diameter of 6.65 mm, a height of 19.95 mm, and a weight of 2.62 g were prepared by mixing EMD and graphite at a weight ratio of 94.5:5.5. The weight of the alkaline electrolyte injected to the separator **4** was 0.70 g, and the amount of the negative electrode **3** filled therein was 2.65 g. Each theoretical capacity of the positive electrodes **2** was 1371 mAh in the alkaline dry batteries.

The results are indicated in Table 6.

Table 6

| | Alkaline electrolyte | | Positive electrode | LR03 alkaline dry battery | | |
|---|---|---|---|---|---|---|
| | Compound No. | Addition rate (wt%) | Theoretical capacity (mAh) | V5-V6 (V) | Discharge duration (hour) | Utilization of positive electrode (%) |
| CE 10 | - | | 1218 | - | 9.97 | 81.9 |
| WE 50 | Compound 2 | 0.1 | 1236 | 0.325 | 11.09 | 89.7 |
| WE 51 | Compound 2 | 0.5 | 1236 | 0.319 | 11.16 | 90.3 |
| WE 52 | Compound 13 | 0.5 | 1236 | 0.306 | 11.29 | 91.3 |
| WE 53 | Compound 23 | 0.5 | 1236 | 0.311 | 11.13 | 90.0 |
| WE 54 | Compound 2 | 1.0 | 1236 | 0.316 | 11.11 | 89.9 |
| CE 11 | - | | 1236 | 0.609 | 10.03 | 81.1 |
| WE 55 | Compound 2 | 0.1 | 1319 | 0.316 | 11.15 | 84.5 |
| WE 56 | Compound 2 | 0.5 | 1319 | 0.311 | 11.21 | 85.0 |
| WE 57 | Compound 13 | 0.5 | 1319 | 0.298 | 11.45 | 86.8 |
| WE 58 | Compound 23 | 0.5 | 1319 | 0.317 | 11.21 | 85.0 |
| WE 59 | Compound 2 | 1.0 | 1319 | 0.300 | 11.39 | 86.4 |
| CE 12 | - | | 1319 | 0.464 | 10.53 | 79.8 |
| WE 60 | Compound 2 | 0.1 | 1359 | 0.291 | 11.53 | 84.9 |
| WE 61 | Compound 2 | 0.5 | 1359 | 0.276 | 11.75 | 86.5 |
| WE 62 | Compound 13 | 0.5 | 1359 | 0.271 | 11.72 | 86.3 |
| WE 63 | Compound 23 | 0.5 | 1359 | 0.289 | 11.67 | 85.9 |
| WE 64 | Compound 2 | 1.0 | 1359 | 0.263 | 11.78 | 86.7 |
| CE 13 | - | | 1359 | 0.412 | 10.92 | 80.4 |
| CE 14 | - | | 1371 | 0.357 | 11.06 | 80.7 |

In Table 6, "V5" is a closed circuit voltage of an alkaline dry battery at the start of the eleventh discharge cycle, "V6'' is a closed circuit voltage of the alkaline dry battery at the end of the eleventh discharge cycle, and "V5-V6" means a difference therebetween and was a voltage difference in Expression 3.

Comparative Examples 10 to 14 will be discussed first.

In Comparative Example 10, the theoretical capacity of the positive electrode **2** was below 1236 mAh and the discharge duration was within ten hours. This proves that the maintaining voltage became below the end voltage, 0.9 V in the tenth cycle in Comparative Example 10.

In each of Comparative Examples 11 to 13, the theoretical capacity of the positive electrode **2** was in the range between 1236 mAh and 1359 mAh, both inclusive, and the discharge duration was over ten hours. This proves that the maintaining voltage became below the end voltage, 0.9 V in the eleventh cycle in each of Comparative Examples 11 to

13. The polarization (V5-V6) was 0.412 to 0.609 V, and voltage drop in the discharge ending was significant.

In Comparative Example 14, the theoretical capacity of the positive electrode **2** was 1371 mAh and the discharge duration was over 11 hours. This proves that in Comparative Example 14, the maintaining voltage was higher than the end voltage, 0.9 V even in the eleventh cycle and the polarization (V5-V6) was comparatively small, 0.357 V.

In contrast, in Working Examples 50 to 64, the maintaining voltage was larger than the end voltage, 0.9 V even in the eleventh cycle and the discharge duration was over 11 hours. This is because remarkable suppression of the polarization (V5-V6) in the eleventh cycle to the range between 0.263 and 0.325 V.

The above results prove that when the theoretical capacities of the positive electrodes **2** were the same, addition of a battery depolarizer of the present invention to the alkaline electrolyte reduced (V5-V6) remarkably. This attains suppression of lowering of the maintaining voltage in the discharge ending and enhancement of the middle load range intermittent discharge.

Referring to the utilization of the positive electrode **2,** when the theoretical capacities of the positive electrodes **2** were the same, addition of a battery depolarizer of the present invention to the alkaline electrolyte increased the utilization of the positive electrodes **2** approximately 10 %. Specifically, the utilization of the positive electrodes **2** was in the range between 79.8 and 81.9 % in Comparative Examples 10 to 14 while each utilization of the positive electrodes **2** was in the range between 84.5 and 91.3 % in Working Examples 50 to 64.

## Claims

**1.** An LR6 alkaline dry battery, comprising:

a positive electrode;
a negative electrode;
a separator between the positive electrode and the negative electrode; and
an alkaline electrolyte with which the positive electrode, the negative electrode, and the separator are impregnated; and
a battery depolarizer in at least the alkaline electrolyte,
wherein in repetition of a discharge cycle where a current of 250 mA is discharged for one hour a day, $0<(Vi1-Vf1)\leq 0.35$ is satisfied when a closed circuit voltage is lower than 0.9 V in an m-th cycle, where Vi1 (volt) is a closed circuit voltage at discharge start in an (m-1)-th cycle discharge, and Vf1 (volt) is a closed circuit voltage at discharge end in the (m-1)-th cycle, wherein
the battery depolarizer is at least one of compounds expressed by Chemical formulae 1 to 3:

**(Chemical formula 1)**

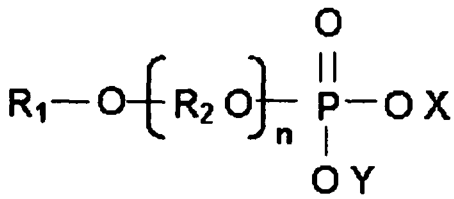

where $R_1$ is a hydrocarbon group of which carbon number is in a range between 1 and 4, both inclusive, $R_2$ is $-CH_2CH_2-$ or $-CH(CH_3)CH_2-$, and n is in a range between 1 and 8, both inclusive;

**(Chemical formula 2)**

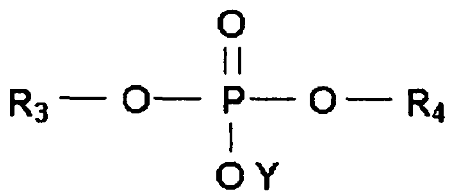

where $R_3$ and $R_4$ each are a hydrogen atom or a hydrocarbon group of which carbon number is in a range between 1 and 6, both inclusive, and a sum of the carbon number of $R_3$ and the carbon number of $R_4$ is in a range between 1 and 6, both inclusive; and

**(Chemical formula 3)**

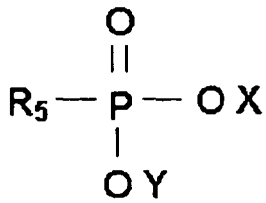

where $R_5$ is a hydrocarbon group of which carbon number is in a range between 1 and 6, both inclusive, and wherein X and Y in Formulae 1 to 3 are independently hydrogen or alkaline metals.

**2.** An LR6 alkaline dry battery, comprising:

a positive electrode;
a negative electrode;
a separator between the positive electrode and the negative electrode; and
an alkaline electrolyte with which the positive electrode, the negative electrode, and the separator are impregnated; and
a battery depolarizer in at least the alkaline electrolyte,
wherein the positive electrode contains, as a positive electrode active material, manganese dioxide of which theoretical capacity is 308 mAh/g, and
in repetition of a discharge cycle where a current of 250 mA is discharged for one hour a day,
$0.76 \leq (250T/308C) \leq 0.86$ is satisfied where T (hour) is a duration from start of the discharge cycle to time when a closed circuit voltage becomes lower than 0.9 V, and C (g) is a weight of the manganese dioxide in the positive electrode, wherein
the battery depolarizer is at least one of compounds expressed by Chemical formulae 1 to 3:

**(Chemical formula 1)**

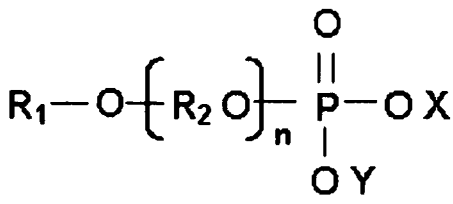

where $R_1$ is a hydrocarbon group of which carbon number is in a range between 1 and 4, both inclusive, $R_2$ is $-CH_2CH_2-$ or $-CH(CH_3)CH_2-$, and n is in a range between 1 and 8, both inclusive;

**(Chemical formula 2)**

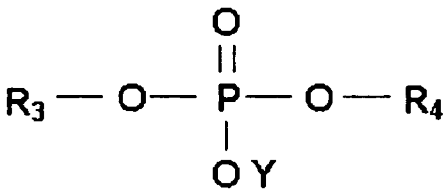

where $R_3$ and $R_4$ each are a hydrogen atom or a hydrocarbon group of which carbon number is in a range between 1 and 6, both inclusive, and a sum of the carbon number of $R_3$ and the carbon number of $R_4$ is in a range between 1 and 6, both inclusive; and

**(Chemical formula 3)**

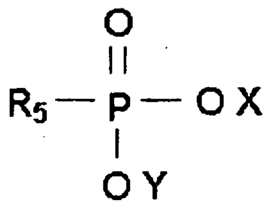

where $R_5$ is a hydrocarbon group of which carbon number is in a range between 1 and 6, both inclusive, and wherein X and Y in Formulae 1 to 3 are independently hydrogen or alkaline metals.

**3.** An LR03 alkaline dry battery, comprising:

a positive electrode;
a negative electrode;
a separator between the positive electrode and the negative electrode; and
an alkaline electrolyte with which the positive electrode, the negative electrode, and the separator are impregnated; and
a battery depolarizer in at least the alkaline electrolyte,
wherein in repetition of a discharge cycle where a current of 100 mA is discharged for one hour a day, $0 \leq (Vi2-Vf2) \leq 0.35$ is satisfied when a closed circuit voltage is lower than 0.9 V in an n-th cycle, where Vi2 (volt) is a closed circuit voltage at discharge start in an (n-1)-th discharge cycle, and Vf2 (volt) is a closed circuit voltage at discharge end in the (n-1)-th cycle, wherein
the battery depolarizer is at least one of compounds expressed by Chemical formulae 1 to 3:

(Chemical formula 1)

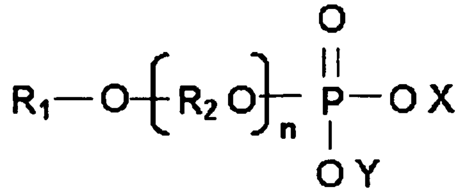

where $R_1$ is a hydrocarbon group of which carbon number is in a range between 1 and 4, both inclusive, $R_2$ is $-CH_2CH_2-$ or $-CH(CH_3)CH_2-$, and n is in a range between 1 and 8, both inclusive;

(Chemical formula 2)

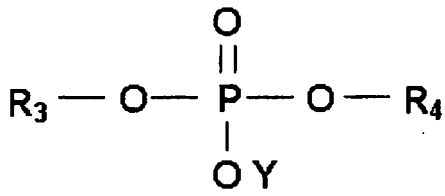

where $R_3$ and $R_4$ each are a hydrogen atom or a hydrocarbon group of which carbon number is in a range between 1 and 6, both inclusive, and a sum of the carbon number of $R_3$ and the carbon number of $R_4$ is in a range between 1 and 6, both inclusive; and

(Chemical formula 3)

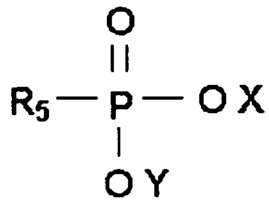

where $R_5$ is a hydrocarbon group of which carbon number is in a range between 1 and 6, both inclusive, and wherein X and Y in Formulae 1 to 3 are independently hydrogen or alkaline metals.

**4.** An LR03 alkaline dry battery, comprising:

a positive electrode;
a negative electrode;
a separator between the positive electrode and the negative electrode; and
an alkaline electrolyte with which the positive electrode, the negative electrode, and the separator are impregnated; and
a battery depolarizer in at least the alkaline electrolyte,
wherein the positive electrode contains, as a positive electrode active material, manganese dioxide of which theoretical capacity is 308 mAh/g, and
in repetition of a discharge cycle where a current of 100 mA is discharged for one hour a day, $0.845 \leq (100T/$

308C)≤0.92 is satisfied where T (hour) is a duration from start of the discharge cycle to time when a closed circuit voltage becomes lower than 0.9 V, and C (g) is a weight of the manganese dioxide in the positive electrode, wherein
the battery depolarizer is at least one of compounds expressed by Chemical formulae 1 to 3:

**(Chemical formula 1)**

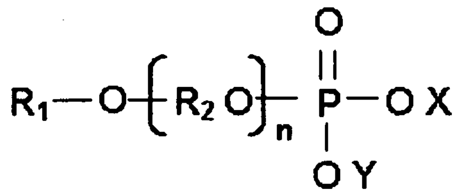

where $R_1$ is a hydrocarbon group of which carbon number is in a range between 1 and 4, both inclusive, $R_2$ is $-CH_2CH_2-$ or $-CH(CH_3)CH_2-$, and n is in a range between 1 and 8, both inclusive;

**(Chemical formula 2)**

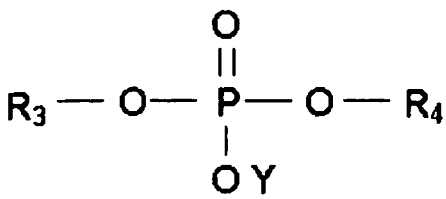

where $R_3$ and $R_4$ each are a hydrogen atom or a hydrocarbon group of which carbon number is in a range between 1 and 6, both inclusive, and a sum of the carbon number of $R_3$ and the carbon number of $R_4$ is in a range between 1 and 6, both inclusive; and

**(Chemical formula 3)**

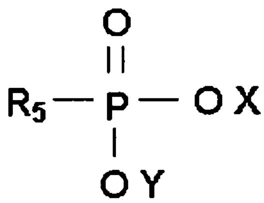

where $R_5$ is a hydrocarbon group of which carbon number is in a range between 1 and 6, both inclusive, and wherein X and Y in Formulae 1 to 3 are independently hydrogen or alkaline metals.

5. The alkaline dry battery of any one of claims 1 to 4,
wherein in Chemical formula 1, $R_1$ is $C_mH_{2m+1}$ - where m is in a range between 1 and 4, both inclusive.

6. The alkaline dry battery of any one of claims 1 to 4,

wherein in Chemical formula 2, $R_3$ is $C_mH_{2m+1}$ - and R4 is $C_nH_{2n+1}$ - where m and n are in a range between 0 and 6, both inclusive, and (m+n) is in a range between 1 and 6, both inclusive.

**7.** The alkaline dry battery of any one of claims 1 to 4,
wherein in Chemical formula 3, $R_5$ is $C_nH_{2n+1}$ - where n is in a range between 1 and 6, both inclusive.

**Patentansprüche**

**1.** LR6 alkalische Trockenbatterie, umfassend:

eine positive Elektrode;
eine negative Elektrode;
einen Separator zwischen der positiven Elektrode und der negativen Elektrode; und
einen alkalischen Elektrolyt mit dem die positive Elektrode, die negative Elektrode, und der Separator imprägniert sind; und
einen Batteriedepolarisator in mindestens dem alkalischen Elektrolyt;
wobei in Wiederholung eines Entladungszykluses, wobei eine Stromstärke von 250 mA entladen wird für eine Stunde pro Tag, $0<(Vi1-Vf1)\leq 0{,}35$ erfüllt ist, wenn eine Spannung im geschlossenen Stromkreis weniger als 0,9 V in einem m-ten Zyklus ist, wobei Vi1 (Volt) eine Spannung im geschlossenen Stromkreis bei Entladungsstart in einer (m-1)-ten Zyklusentladung ist, und Vf1 (Volt) eine Spannung im geschlossenen Stromkreis beim Entladungsende im (m-1)-ten Zyklus ist, wobei
der Batteriedepolarisator mindestens eine der Verbindungen ist, die durch die chemischen Formeln 1 bis 3 dargestellt sind:

(Chemische Formel 1)

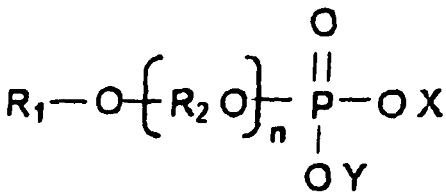

wobei $R_1$ eine Kohlenwasserstoffgruppe ist, deren Kohlenstoffzahl im Bereich zwischen 1 und 4 ist, beides inklusive, $R_2$ $-CH_2CH_2-$ oder $-CH(CH_3)CH_2-$ ist, und n im Bereich zwischen 1 und 8 ist, beides inklusive;

(Chemische Formel 2)

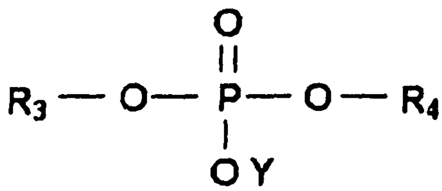

wobei $R_3$ und $R_4$ jeweils ein Wasserstoffatom oder eine Kohlenwasserstoffgruppe sind, deren Kohlenstoffzahl im Bereich zwischen 1 und 6 ist, beides inklusive, und die Summe der Kohlenstoffzahl von $R_3$ und der Kohlenstoffzahl von $R_4$ im Bereich zwischen 1 und 6 ist, beides inklusive; und

(Chemische Formel 3)

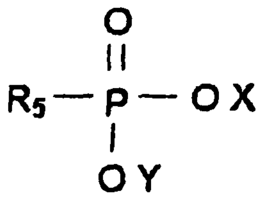

wobei $R_5$ eine Kohlenwasserstoffgruppe ist, deren Kohlenstoffzahl im Bereich zwischen 1 und 6 ist, beides inklusive, und
wobei X und Y in den Formeln 1 bis 3 unabhängig voneinander Wasserstoff oder Alkalimetalle sind.

**2.** LR6 alkalische Trockenbatterie, umfassend:

eine positive Elektrode;
eine negative Elektrode;
einen Separator zwischen der positiven Elektrode und der negativen Elektrode; und
einen alkalischen Elektrolyt mit dem die positive Elektrode, die negative Elektrode, und der Separator imprägniert sind; und
einen Batteriedepolarisator in mindestens dem alkalischen Elektrolyt;
wobei die positive Elektrode, als ein aktives Material der positiven Elektrode, Mangandioxid mit einer theoretischen Kapazität von 308 mAh/g enthält, und
in Wiederholung eines Entladungszykluses, wobei eine Stromstärke von 250 mA entladen wird für eine Stunde pro Tag,
$0{,}76 \leq (250T/308C) \leq 0{,}85$ erfüllt ist, wobei T (Stunde) eine Zeitdauer vom Start des Entladungszykluses bis zur Zeit, bei der eine Spannung im geschlossenen Stromkreis weniger als 0,9 V wird, und C (g) ein Gewicht des Mangandioxids in der positiven Elektrode ist, wobei
der Batteriedepolarisator mindestens eine der Verbindungen ist, die durch die chemischen Formeln 1 bis 3 dargestellt sind:

(Chemische Formel 1)

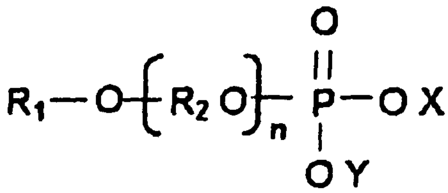

wobei $R_1$ eine Kohlenwasserstoffgruppe ist, deren Kohlenstoffzahl im Bereich zwischen 1 und 4 ist, beides inklusive, $R_2$ $-CH_2CH_2-$ oder $-CH(CH_3)CH_2-$ ist, und n im Bereich zwischen 1 und 8 ist, beides inklusive;

(Chemische Formel 2)

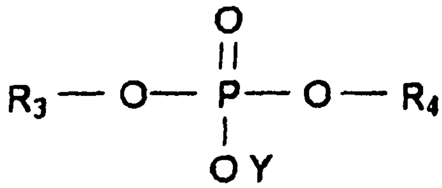

wobei $R_3$ und $R_4$ jeweils ein Wasserstoffatom oder eine Kohlenwasserstoffgruppe sind, deren Kohlenstoffzahl im Bereich zwischen 1 und 6 ist, beides inklusive, und die Summe der Kohlenstoffzahl von $R_3$ und der Kohlenstoffzahl von $R_4$ im Bereich zwischen 1 und 6 ist, beides inklusive; und

(Chemische Formel 3)

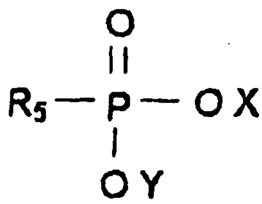

wobei $R_5$ eine Kohlenwasserstoffgruppe ist, deren Kohlenstoffzahl im Bereich zwischen 1 und 6 ist, beides inklusive, und
wobei X und Y in den Formeln 1 bis 3 unabhängig voneinander Wasserstoff oder Alkalimetalle sind.

**3.** LR03 alkalische Trockenbatterie, umfassend:

eine positive Elektrode;
eine negative Elektrode;
einen Separator zwischen der positiven Elektrode und der negativen Elektrode; und
einen alkalischen Elektrolyt, mit dem die positive Elektrode, die negative Elektrode, und der Separator imprägniert sind; und
einen Batteriedepolarisator in mindestens dem alkalischen Elektrolyt,
wobei in Wiederholung eines Entladungszykluses, wenn eine Stromstärke von 100 mA entladen wird für eine Stunde pro Tag, $0<(V12-Vf2)\leq 0,35$ erfüllt ist, wenn eine Spannung im geschlossenen Stromkreis weniger als 0,9 V in einem n-ten Zyklus ist, wobei Vi2 (Volt) eine Spannung im geschlossenen Stromkreis bei Entladungsstart in einem (n-1)-ten Entladungszyklus ist, und Vf2 (Volt) eine Spannung im geschlossenen Stromkreis beim Entladungsende im (n-1)-ten Zyklus ist, wobei
der Batteriedepolarisator mindestens eine der Verbindungen ist, die durch die chemischen Formeln 1 bis 3 dargestellt sind:

(Chemische Formel 1)

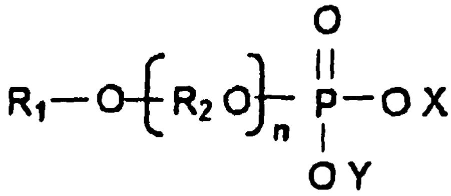

wobei $R_1$ eine Kohlenwasserstoffgruppe ist, deren Kohlenstoffzahl im Bereich zwischen 1 und 4 ist, beides inklusive, $R_2$ $-CH_2CH_2-$ oder $-CH(CH_3)CH_2-$ ist, und n im Bereich zwischen 1 und 8 ist, beides inklusive;

(Chemische Formel 2)

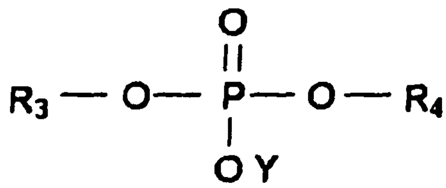

wobei $R_3$ und $R_4$ jeweils ein Wasserstoffatom oder eine Kohlenwasserstoffgruppe sind, deren Kohlenstoffzahl im Bereich zwischen 1 und 6 ist, beides inklusive, und die Summe der Kohlenstoffzahl von $R_3$ und der Kohlenstoffzahl von $R_4$ im Bereich zwischen 1 und 6 ist, beides inklusive; und

(Chemische Formel 3)

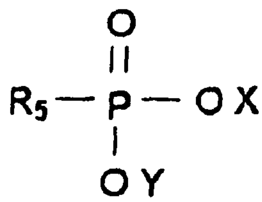

wobei $R_5$ eine Kohlenwasserstoffgruppe ist, deren Kohlenstoffzahl im Bereich zwischen 1 und 6 ist, beides inklusive, und
wobei X und Y in den Formeln 1 bis 3 unabhängig voneinander Wasserstoff oder Alkalimetalle sind.

**4.** LR03 alkalische Trockenbatterie, umfassend:

eine positive Elektrode;
eine negative Elektrode;
einen Separator zwischen der positiven Elektrode und der negativen Elektrode; und
einen alkalischen Elektrolyt mit dem die positive Elektrode, die negative Elektrode, und der Separator imprägniert sind; und
einen Batteriedepolarisator in mindestens dem alkalischen Elektrolyt;
wobei die positive Elektrode, als ein aktives Material der positiven Elektrode, Mangandioxid mit einer theoretischen Kapazität von 308 mAh/g enthält, und

in Wiederholung eines Entladungszykluses, wobei eine Stromstärke von 100 mA entladen wird für eine Stunde pro Tag, $0{,}84 \leq (100T/308C) \leq 0{,}92$ erfüllt ist, wobei T (Stunde) eine Zeitdauer vom Start des Entladungszykluses bis zur Zeit, bei der eine Spannung im geschlossenen Stromkreis weniger als 0,9 V wird, und C (g) ein Gewicht des Mangandioxids in der positiven Elektrode ist, wobei der Batteriedepolarisator mindestens eine der Verbindungen ist, die durch die chemischen Formeln 1 bis 3 dargestellt sind:

(Chemische Formel 1)

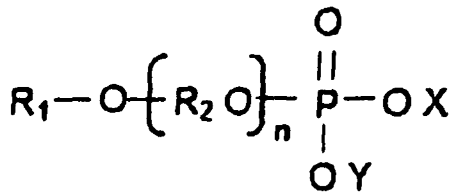

wobei $R_1$ eine Kohlenwasserstoffgruppe ist, deren Kohlenstoffzahl im Bereich zwischen 1 und 4 ist, beides inklusive, $R_2$ $-CH_2CH_2-$ oder $-CH(CH_3)CH_2-$ ist, und n im Bereich zwischen 1 und 8 ist, beides inklusive;

(Chemische Formel 2)

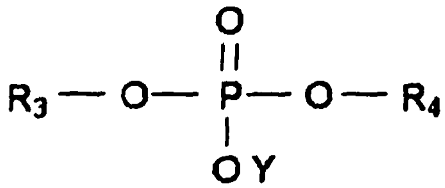

wobei $R_3$ und $R_4$ jeweils ein Wasserstoffatom oder eine Kohlenwasserstoffgruppe sind, deren Kohlenstoffzahl im Bereich zwischen 1 und 6 ist, beides inklusive, und die Summe der Kohlenstoffzahl von $R_3$ und der Kohlenstoffzahl von $R_4$ im Bereich zwischen 1 und 6 ist, beides inklusive; und

(Chemische Formel 3)

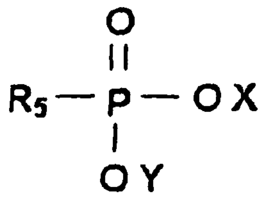

wobei $R_5$ eine Kohlenwasserstoffgruppe, deren Kohlenstoffzahl im Bereich zwischen 1 und 6 ist, beides inklusive, und wobei X und Y in den Formeln 1 bis 3 unabhängig voneinander Wasserstoff oder Alkalimetalle sind.

5. Alkalische Trockenbatterie nach einem der Ansprüche 1 bis 4, wobei in der chemischen Formel 1, $R_1$ $C_mH_{2m+1}-$ ist, wobei m im Bereich zwischen 1 und 4 ist, beides inklusive.

6. Alkalische Trockenbatterie nach einem der Ansprüche 1 bis 4, wobei in der chemischen Formel 2, $R_3$ $C_mH_{2m+1}$- und $R_4$ $C_nH_{2n+1}$- ist, wobei m und n im Bereich zwischen 6 und 0 sind, beides inklusive, und (m+n) im Bereich zwischen 1 und 6 ist, beides inklusive.

7. Alkalische Trockenbatterie nach einem der Ansprüche 1 bis 4, wobei in der chemischen Formel 3, $R_5$ $C_nH_{2n+1}$- ist, wobei n im Bereich zwischen 1 und 6 ist, beides inklusive.

**Revendications**

1. Pile sèche alcaline LR6, comprenant :

   une électrode positive ;
   une électrode négative ;
   un séparateur entre l'électrode positive et l'électrode négative ; et
   un électrolyte alcalin dont l'électrode positive, l'électrode négative, et le séparateur sont imprégnés ; et
   un dépolarisant pour pile au moins dans l'électrolyte alcalin,
   dans laquelle lors d'une répétition d'un cycle de décharge où un courant de 250 mA se décharge pendant une heure par jour, 0<(Vi1-Vf1)≤0,35 est satisfait quand une tension en circuit fermé est inférieure à 0,9 V dans un m-ième cycle, Vi1(volt) étant une tension en circuit fermé au démarrage de la décharge dans une décharge au (m-1)-ième cycle, et Vf1 (volt) étant une tension en circuit fermé à la fin de la décharge dans le (m-1)-ième cycle, le dépolarisant pour pile étant au moins un des composés représentés par les formules chimiques 1 à 3 :

   (Formule chimique 1)

   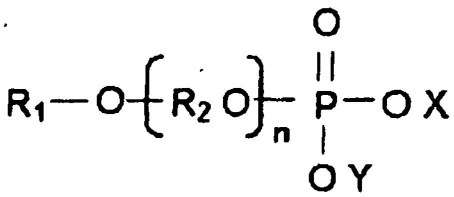

   où $R_1$ est un groupe hydrocarboné dont le nombre de carbones est compris entre 1 et 4, limites incluses, $R_2$ est $-CH_2CH_2-$ ou - $CH(CH_3)CH_2-$, et n est compris entre 1 à 8, limites incluses ;

   (Formule chimique 2)

   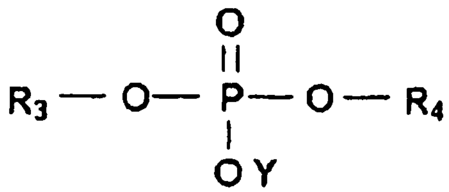

   où $R_3$ et $R_4$ sont chacun un atome d'hydrogène ou un groupe hydrocarboné dont le nombre de carbones est compris entre 1 et 6, limites incluses, et une somme du nombre de carbones de $R_3$ et du nombre de carbones de $R_4$ est comprise entre 1 et 6, limites incluses ; et

(Formule chimique 3)

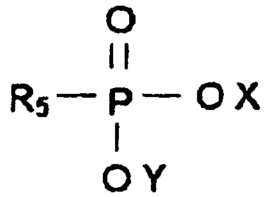

où $R_5$ est un groupe hydrocarboné dont le nombre de carbones est compris entre 1 et 6, limites incluses, et X et Y dans les formules 1 à 3 étant indépendamment un hydrogène ou des métaux alcalins.

**2.** Pile sèche alcaline LR6, comprenant :

une électrode positive ;
une électrode négative ;
un séparateur entre l'électrode positive et l'électrode négative ; et
un électrolyte alcalin dont l'électrode positive, l'électrode négative, et le séparateur sont imprégnés ; et
un dépolarisant pour pile au moins dans l'électrolyte alcalin,
dans laquelle l'électrode positive contient, en tant que matériau actif d'électrode positive, du dioxyde de manganèse dont la capacité théorique est de 308 mAh/g, et
lors d'une répétition d'un cycle de décharge où un courant de 250 mA se décharge pendant une heure par jour, $0,76 \leq (250T/308C) \leq 0,86$ est satisfait, où T (heure) est une durée allant du démarrage du cycle de décharge jusqu'au temps où une tension en circuit fermé devient inférieure à 0,9 V, et C (g) est une masse du dioxyde de manganèse dans l'électrode positive,
le dépolarisant pour pile étant au moins un des composés représentés par les formules chimiques 1 à 3 :

(Formule chimique 1)

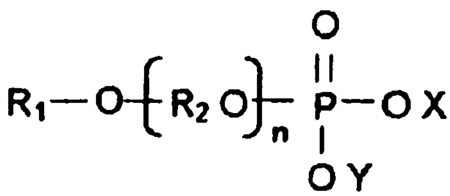

où $R_1$ est un groupe hydrocarboné dont le nombre de carbones est compris entre 1 et 4, limites incluses, $R_2$ est $-CH_2CH_2-$ ou $-CH(CH_3)CH_2-$, et n est compris entre 1 à 8, limites incluses ;

(Formule chimique 2)

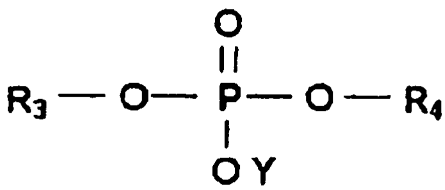

où $R_3$ et $R_4$ sont chacun un atome d'hydrogène ou un groupe hydrocarboné dont le nombre de carbones est compris entre 1 et 6, limites incluses, et une somme du nombre de carbones de $R_3$ et du nombre de carbones de $R_4$ est comprise entre 1 et 6, limites incluses ; et

(Formule chimique 3)

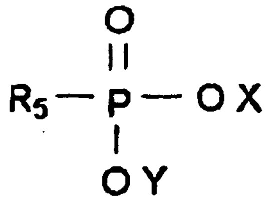

où $R_5$ est un groupe hydrocarboné dont le nombre de carbones est compris entre 1 et 6, limites incluses, et X et Y dans les formules 1 à 3 étant indépendamment un hydrogène ou des métaux alcalins.

**3.** Pile sèche alcaline LR03, comprenant :

une électrode positive ;
une électrode négative ;
un séparateur entre l'électrode positive et l'électrode négative ; et
un électrolyte alcalin dont l'électrode positive, l'électrode négative, et le séparateur sont imprégnés ; et
un dépolarisant pour pile au moins dans l'électrolyte alcalin,
dans laquelle lors d'une répétition d'un cycle de décharge où un courant de 100 mA se décharge pendant une heure par jour, $0<(Vi2-Vf2)\leq 0{,}35$ est satisfait quand une tension en circuit fermé est inférieure à 0,9 V dans un n-ième cycle, Vi2 (volt) étant une tension en circuit fermé au démarrage de la décharge dans un (n-1)-ième cycle de décharge, et Vf2 (volt) étant une tension en circuit fermé à la fin de la décharge dans le (n-1)-ième cycle, le dépolarisant pour pile étant au moins un des composés représentés par les formules chimiques 1 à 3 :

(Formule chimique 1)

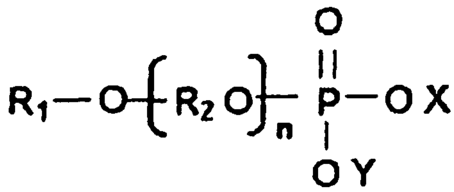

où $R_1$ est un groupe hydrocarboné dont le nombre de carbones est compris entre 1 et 4, limites incluses, $R_2$ est $-CH_2CH_2-$ ou $-CH(CH_3)CH_2-$, et n est compris entre 1 à 8, limites incluses ;

(Formule chimique 2)

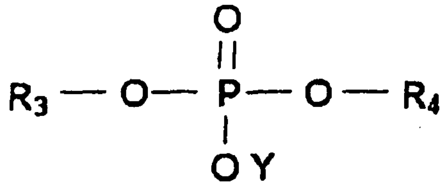

où $R_3$ et $R_4$ sont chacun un atome d'hydrogène ou un groupe hydrocarboné dont le nombre de carbones est compris entre 1 et 6, limites incluses, et une somme du nombre de carbones de $R_3$ et du nombre de carbones de $R_4$ est comprise entre 1 et 6, limites incluses ; et

(Formule chimique 3)

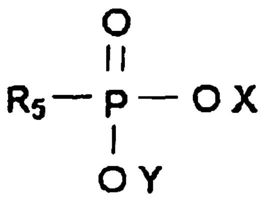

où $R_5$ est un groupe hydrocarboné dont le nombre de carbones est compris entre 1 et 6, limites incluses, et X et Y dans les formules 1 à 3 étant indépendamment un hydrogène ou des métaux alcalins.

**4.** Pile sèche alcaline LR03, comprenant :

une électrode positive ;
une électrode négative ;
un séparateur entre l'électrode positive et l'électrode négative ; et
un électrolyte alcalin dont l'électrode positive, l'électrode négative, et le séparateur sont imprégnés ; et
un dépolarisant pour pile au moins dans l'électrolyte alcalin,
dans laquelle l'électrode positive contient, en tant que matériau actif d'électrode positive, du dioxyde de manganèse dont la capacité théorique est de 308 mAh/g, et
lors d'une répétition d'un cycle de décharge où un courant de 100 mA se décharge pendant une heure par jour, $0{,}84 \leq (100T/308C) \leq 0{,}92$ est satisfait, où T (heure) est une durée allant du démarrage du cycle de décharge jusqu'au temps où une tension en circuit fermé devient inférieure à 0,9 V, et C (g) est une masse du dioxyde de manganèse dans l'électrode positive,
le dépolarisant pour pile étant au moins un des composés représentés par les formules chimiques 1 à 3 :

(Formule chimique 1)

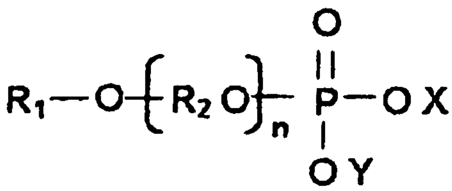

où $R_1$ est un groupe hydrocarboné dont le nombre de carbones est compris entre 1 et 4, limites incluses, $R_2$ est $-CH_2CH_2-$ ou $-CH(CH_3)CH_2-$, et n est compris entre 1 à 8, limites incluses ;

(Formule chimique 2)

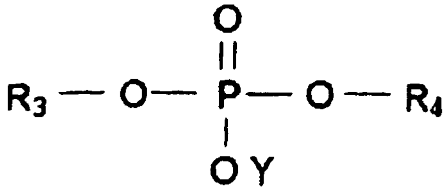

où $R_3$ et $R_4$ sont chacun un atome d'hydrogène ou un groupe hydrocarboné dont le nombre de carbones est compris entre 1 et 6, limites incluses, et une somme du nombre de carbones de $R_3$ et du nombre de carbones de $R_4$ est comprise entre 1 et 6, limites incluses ; et

(Formule chimique 3)

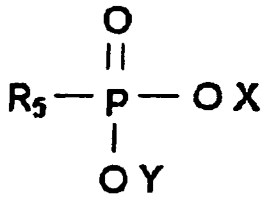

où $R_5$ est un groupe hydrocarboné dont le nombre de carbones est compris entre 1 et 6, limites incluses, et X et Y dans les formules 1 à 3 étant indépendamment un hydrogène ou des métaux alcalins.

**5.** Pile sèche alcaline de l'une quelconque des revendications 1 à 4, dans laquelle dans la formule chimique 1, $R_1$ est $C_mH_{2m+1}$- où m est compris entre 1 et 4, limites incluses.

**6.** Pile sèche alcaline de l'une quelconque des revendications 1 à 4, dans laquelle dans la formule chimique 2, $R_3$ est $C_mH_{2m+1}$- et $R_4$ est $C_nH_{2n+1}$- où m et n sont compris entre 0 et 6, limites incluses, et (m+n) est compris entre 1 et 6, limites incluses.

**7.** Pile sèche alcaline de l'une quelconque des revendications 1 à 4, dans laquelle dans la formule chimique 3, $R_5$ est $C_nH_{2n+1}$- où n est compris entre 1 et 6, limites incluses.

FIG. 1

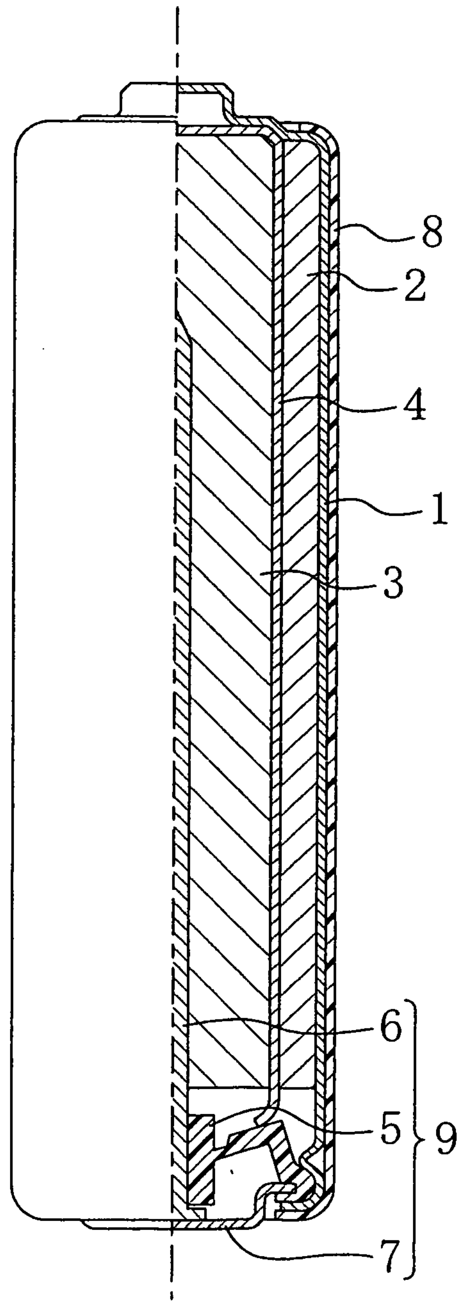

FIG. 2

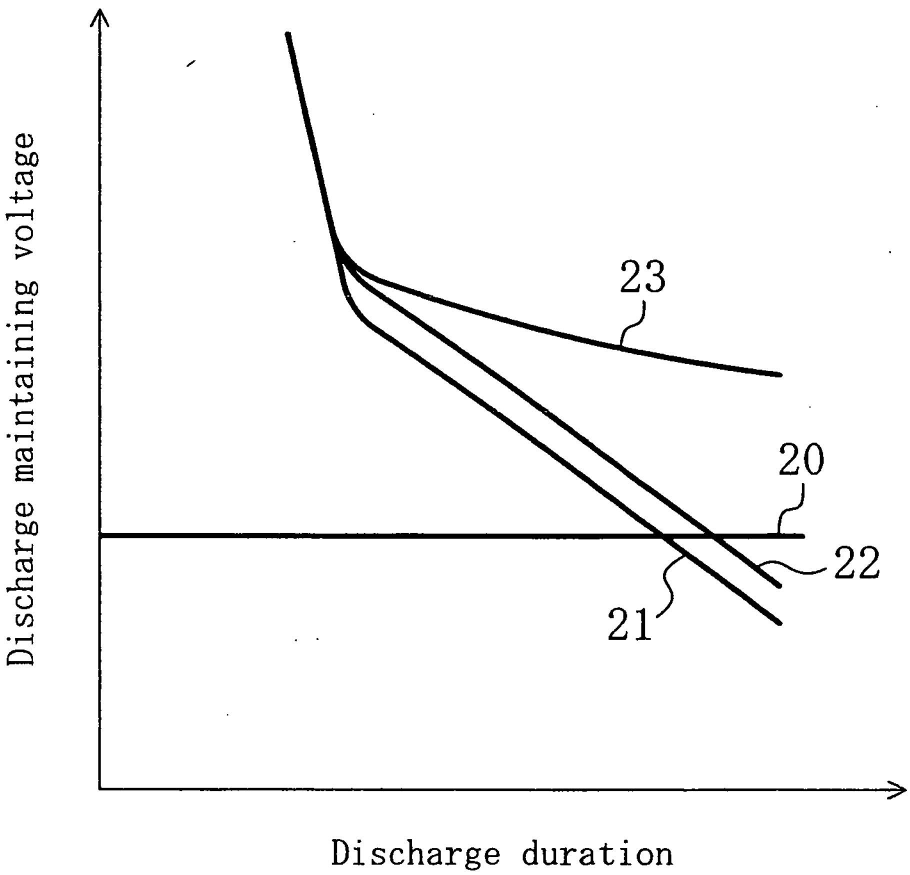
Discharge maintaining voltage
23
20
22
21
Discharge duration

FIG. 3

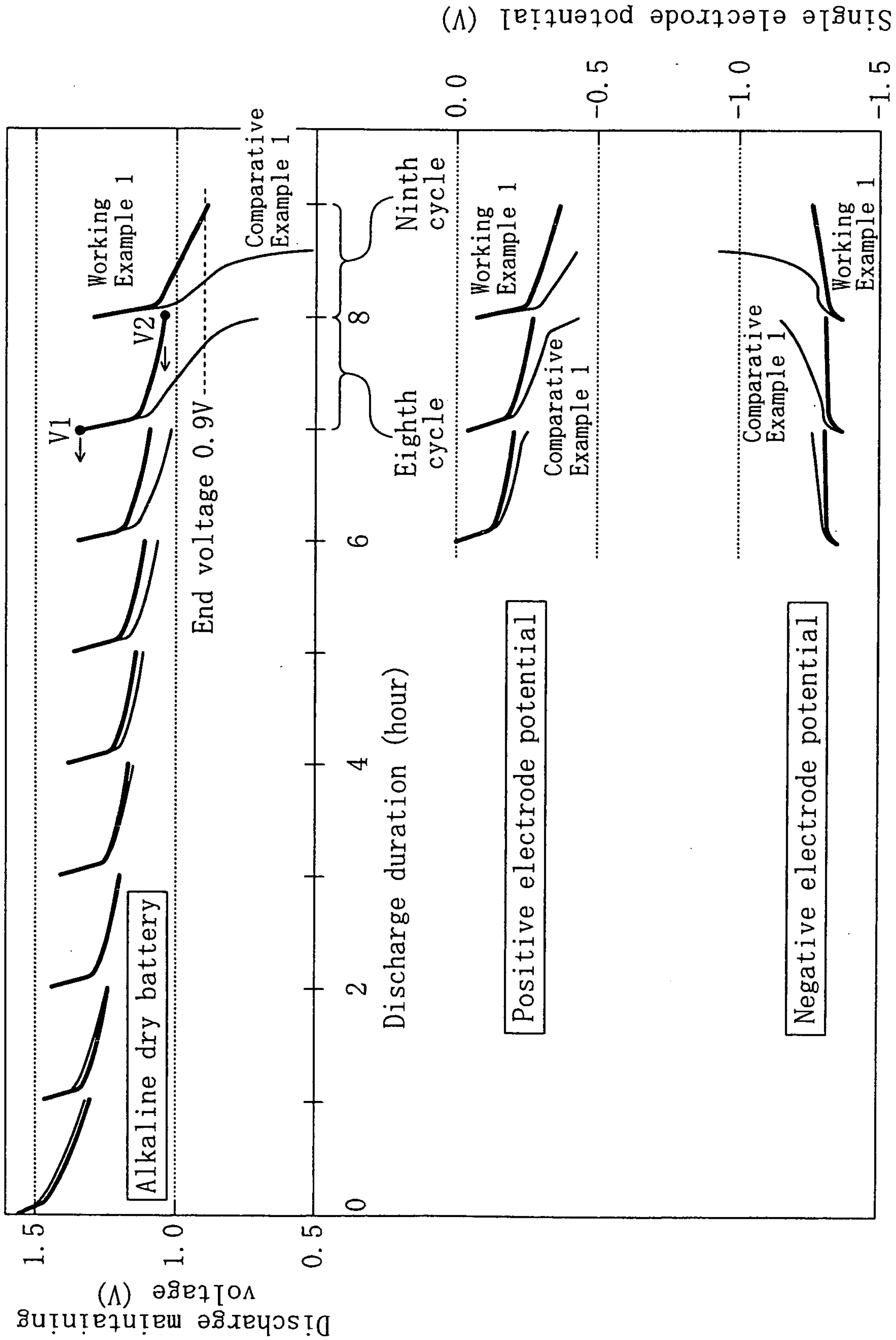
Discharge maintaining voltage (V)
1.5
1.0
0.5
Single electrode potential (V)
0.0
-0.5
-1.0
-1.5
Discharge duration (hour)
0
2
4
6
8
Alkaline dry battery
Positive electrode potential
Negative electrode potential
End voltage 0.9V
V1
V2
Working Example 1
Comparative Example 1
Eighth cycle
Ninth cycle

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 7122276 A
- JP 9180736 A
- JP 8510355 PCT
- JP 2002530815 PCT
- US 4195120 A
- GB 2200791 A
- JP 6163024 A
- JP 2006032320 A
- JP 60180058 A
- JP 11144690 A


### Non-patent literature cited in the description


- Battery Handbook. Battery Handbook Editor's Society. Maruzen Co., Ltd, 20 August 1990, 119